# EUROPEAN PATENT APPLICATION

(11) **EP 2 573 613 A1**
(43) Date of publication of application: **27.03.2013**
(21) Application number: 12006068.6
(22) Date of filing: 27.08.2012
(51) Int. Cl.: G02B 27/22, G02B 21/00

(54) **Information processing apparatus, information processing method, program, and information processing system**

(30) Priority: 09.09.2011 JP 2011196749
(71) Applicant: Sony Corporation, Tokyo 108-0075 (JP)
(72) Inventor: Hara, Masaaki, Tokyo, 108-0075 (JP); Fukumoto, Atsushi, Tokyo, 108-0075 (JP); Morifuji, Takafumi, Tokyo, 108-0075 (JP); Ogata, Masami, Tokyo, 108-0075 (JP); Okamoto, Yoshiki, Tokyo, 108-0075 (JP)
(74) Representative: Müller - Hoffmann & Partner

(57) **Abstract**

Provided is an information processing apparatus including a correction unit that corrects at least position coordinates used to specify a position of an enlarged-image group generated in accordance with a scanning method of a microscope that scans a sample in vertical, horizontal, and depth directions and generates an image data group corresponding to the enlarged-image group of the sample, and a stereoscopic image generation unit that generates a stereoscopic image of the enlarged-image group by giving parallax to the corrected image data group.

## Description

### BACKGROUND

The present disclosure relates to an information processing apparatus, an information processing method, a program, and an information processing system.

In the fields of biology, biotechnology, and the like, various kinds of microscopes such as confocal microscopes are used to observe the physiological responses or shapes of biological cells (for example, see Japanese Unexamined Patent Application Publication No. 2006-84960). In particular, when a confocal microscope is used as a microscope, slice images can be obtained without preparing thin slices of a measurement specimen. Image information regarding the measurement specimen can be provided to users by forming a virtual three-dimensional image in an arithmetic processing apparatus based on the obtained slice images and generating a two-dimensional image when the measurement specimen is seen with one eye from any viewpoint based on the virtual three-dimensional image.

On the other hand, with development of information processing technology and information communication technology, users are provided with image data regarding a stereoscopic image with a binocular parallax and thus can view a binocular stereoscopic image displayed on a display apparatus (for example, see Japanese Unexamined Patent Application Publication No. 2005-6114).

### SUMMARY

The inventors have thoroughly examined microscopic images (enlarged images) obtained with a microscope, and consequently consider it possible to accurately provide the three-dimensional structure of a measurement specimen to users by applying technologies for generating a binocular stereoscopic image to a microscopic image group.

Here, as methods of scanning a measurement specimen with a microscope, there are various methods such as a raster scanning method and a zigzag scanning method. The inventors have made a thorough examination to realize a technology for generating a binocular stereoscopic image, and have consequently found that a lattice point interval of position coordinates used to specify the position of a measurement specimen is not uniform in some cases depending on a scanning method. When a binocular stereoscopic image is attempted to be generated despite the fact that the lattice point interval of a coordinate system is not uniform, it is difficult to generate the three-dimensional image of the measurement specimen accurately.

It is desirable to provide an information processing apparatus, an information processing method, a program, and an information processing system capable of generating a binocular stereoscopic image accurately irrespective of a scanning method used for a microscope.

According to an embodiment of the present disclosure, there is provided an information processing apparatus including a correction unit that corrects at least position coordinates used to specify a position of an enlarged-image group generated in accordance with a scanning method of a microscope that scans a sample in vertical, horizontal, and depth directions and generates an image data group corresponding to the enlarged-image group of the sample, and a stereoscopic image generation unit that generates a stereoscopic image of the enlarged-image group by giving parallax to the corrected image data group.

According to another embodiment of the present disclosure, there is provided an information processing method including correcting at least position coordinates used to specify a position of an enlarged-image group generated in accordance with a scanning method of a microscope that scans a sample in vertical, horizontal, and depth directions and generates an image data group corresponding to the enlarged-image group of the sample, and generating a stereoscopic image of the enlarged-image group by giving parallax to the corrected image data group.

According to still another embodiment of the present disclosure, there is provided a program for causing a computer, which is able to acquire data from a microscope that scans a sample in vertical, horizontal, and depth directions and generates an image data group corresponding to an enlarged-image group of the sample, to realize a correction function of correcting at least position coordinates used to specify a position of the enlarged-image group of the sample generated in accordance with a scanning method of the microscope, and a stereoscopic image generation function of generating a stereoscopic image of the enlarged-image group by giving parallax to the corrected image data group.

According to yet another embodiment of the present disclosure, there is provided an information processing system including a microscope that scans a sample in vertical, horizontal, and depth directions to generate an image data group corresponding to an enlarged-image group of the sample, and an information processing apparatus that includes a correction unit that corrects at least position coordinates used to specify a position of the enlarged-image group generated by the microscope in accordance with a scanning method of the microscope and a stereoscopic image generation unit that generates a stereoscopic image of the enlarged-image group by giving parallax to the corrected image data group.

According to the embodiments of the present disclosure described above, the stereoscopic image of the enlarged image is generated by correcting at least the position coordinates used to specify the position of the generated enlarged-image group in accordance with the scanning method of the microscope and giving parallax to the corrected image data group.

According to the embodiments of the present disclosure described above, it is possible to generate a binocular stereoscopic image accurately irrespective of a scanning method used for a microscope.

### BRIEF DESCRIPTION OF THE DRAWINGS

FIG. 1 is a diagram illustrating an example of the configuration of a microscope system according to a first embodiment of the present disclosure;
FIG. 2 is a diagram illustrating fluorescence;
FIG. 3 is a diagram illustrating the principle of a confocal microscope;
FIG. 4 is a diagram illustrating the principle of the confocal microscope;
FIG. 5 is a diagram illustrating a difference in fluorescence between one-photon excitation and two-photon excitation;
FIG. 6 is a graph illustrating light absorption characteristics of a biological subject;
FIG. 7 is a diagram illustrating a two-photon excitation fluorescent microscope;
FIG. 8 is a diagram illustrating a sample scanning method of the microscope;
FIG. 9 is a diagram illustrating a sample scanning method of the microscope;
FIG. 10 is a diagram illustrating a sample scanning method of the microscope;
FIG. 11 is a diagram illustrating a sample scanning method of the microscope;
FIG. 12 is a diagram illustrating a sample scanning method of the microscope;
FIG. 13 is a diagram illustrating a sample scanning method of the microscope;
FIG. 14 is a diagram illustrating a method of generating a three-dimensional image;
FIG. 15 is a diagram illustrating a method of generating a three-dimensional image in the information processing apparatus according to the embodiment;
FIG. 16 is a block diagram illustrating an example of the configuration of the information processing apparatus according to the embodiment;
FIG. 17 is a block diagram illustrating the configuration of a measurement data correction unit of the information processing apparatus according to the embodiment;
FIG. 18 is a diagram illustrating a time correction process according to the embodiment;
FIG. 19 is a diagram illustrating interpolation of data;
FIG. 20 is a diagram illustrating a coordinate correction process according to the embodiment;
FIG. 21 is a diagram illustrating a process of generating stereoscopic image data according to the embodiment;
FIG. 22 is a block diagram illustrating the configuration of a stereoscopic image data generation unit of the information processing apparatus according to the embodiment;
FIG. 23A is a graph illustrating an example of a relation between a depth position of an image and parallax;
FIG. 23B is a graph illustrating an example of a relation between a depth position of an image and parallax;
FIG. 24 is a diagram illustrating stereoscopic image data to be generated;
FIG. 25 is a diagram illustrating a process of changing a display region of a stereoscopic image;
FIG. 26 is a diagram illustrating a process of changing a display region of a stereoscopic image;
FIG. 27 is a diagram illustrating a microscope system according to a first modified example of the embodiment;
FIG. 28 is a flowchart illustrating an example of the flow of an information processing method according to an embodiment; and
FIG. 29 is a block diagram illustrating an example of the hardware configuration of an information processing apparatus according to an embodiment of the present disclosure.

### DETAILED DESCRIPTION OF THE EMBODIMENTS

Hereinafter, preferred embodiments of the present disclosure will be described in detail with reference to the accompanying drawings. Throughout the specification and the drawings, the same reference numerals are given to constituent elements having substantially the same function and the description thereof will not be repeated.

The description will be made in the following order.
(1) First Embodiment
(1-1) Microscope System
(1-2) Microscope
(1-3) Binocular Stereoscopic Display of Microscopic Image
(1-4) Configuration of Information Processing Apparatus
(1-5) Information Processing Method
(1-6) First Modified Example
(2) Hardware Configuration of Information Processing Apparatus According to Embodiment of the Present Disclosure
(3) Summarization

### (1) First Embodiment

### Microscope System

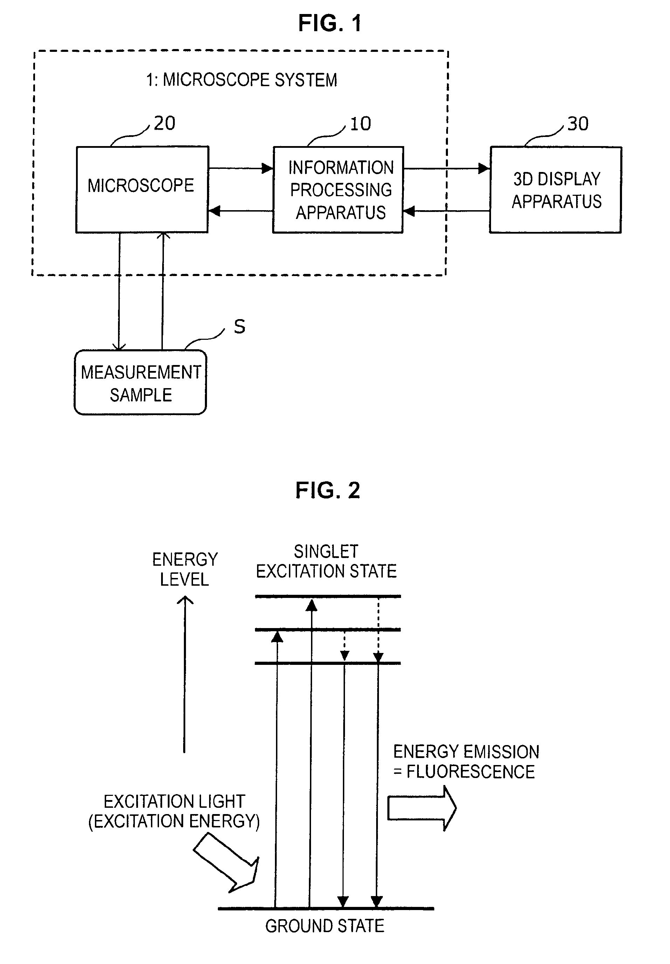

First, a microscope system according to a first embodiment of the present disclosure will be described with reference to FIG. 1. FIG. 1 is a diagram illustrating an example of the microscope system according to this embodiment.

A microscope system 1 according to this embodiment includes an information processing apparatus 10 and a microscope 20 as main units, as exemplified in FIG. 1.

The information processing apparatus 10 performs a predetermined correction process on an enlarged-image group of a measurement sample S generated by the microscope 20 to be described below. The information processing apparatus 10 generates a binocular stereoscopic image of the measurement sample S using the corrected enlarged-image group. The binocular stereoscopic image generated by the information processing apparatus 10 may be a still image or a moving image.

Concrete data (hereinafter, also referred to as "stereoscopic image data") of the binocular stereoscopic image generated by the information processing apparatus 10 is output to a 3D display apparatus 30 that is capable of displaying a stereoscopic image and is displayed on the 3D display apparatus 30 for users.

In FIG. 1, the case in which the information processing apparatus 10 according to this embodiment is installed as an apparatus different from the microscope 20 has been described. However, the functions of the information processing apparatus 10 according to this embodiment may be mounted on a computer controlling the operation of the microscope 20 or may be mounted on any computer installed inside the casing of the microscope 20. The configuration of the information processing apparatus 10 will be described in detail later.

The microscope 20 three-dimensionally scans the measurement sample S in the vertical, horizontal, and depth directions of the measurement sample S and generates an image data group corresponding to the enlarged-image group of the measurement sample S. Examples of the microscope 20 include optical microscopes such as a stereoscopic microscope, a fluorescent microscope, and a confocal microscope. A kind of microscope 20 to be used in the microscope system 1 according to this embodiment may be appropriately determined depending on a kind of sample to be measured.

In the microscope system 1 according to this embodiment, when the microscope 20 generates the enlarged images of the measurement sample S, the microscope 20 outputs the concrete data (enlarged-image data) corresponding to the generated enlarged images to the information processing apparatus 10.

Hereinafter, a substance (for example, cells or the like dyed with a fluorescent pigment) that is able to emit fluorescence will be used as an example of the measurement sample S for description. Further, a so-called fluorescent microscope will be used as an example of the microscope 20 for the description. The fluorescent microscope used in this embodiment will be described in detail below.

The 3D display apparatus 30 is a display apparatus that provides users with a stereoscopic microscope image of the measurement sample by displaying a binocular stereoscopic image of the measurement sample generated by the information processing apparatus 10 on a display screen. The 3D display apparatus 30 according to this embodiment is not particularly limited, as long as the 3D display apparatus 30 is able to display a binocular stereoscopic image. A display apparatus according to the related art can also be used.

The microscope system 1 according to this embodiment has been described simply with reference to FIG. 1.

### Microscope

Next, before the information processing apparatus 10 according to this embodiment is described, the microscope 20 used for the microscope system 1 according to this embodiment will be described in detail with reference to FIGS. 2 to 13.

One of the phenomena occurring in the relevant measurement sample S in this embodiment is fluorescence emitted from the measurement sample S. First, the fluorescence will be simply described below with reference to FIG. 2. FIG. 2 is a diagram illustrating the fluorescence.

When light with a predetermined wavelength is radiated to given molecules forming a measurement sample (or attached to a measurement sample), electrons of the molecules sometimes move from the energy level corresponding to a ground state to the energy level corresponding to an excited state using the energy of the radiated light. The light radiated at this time is called excitation light. When the molecules in the ground state are excited and a singlet excitation state occurs, the excited electrons move to one energy level corresponding to the singlet excitation state. However, the excited electrons gradually move to a lower energy level while emitting energy by internal conversion. When the electrons in the excited state return to the ground state, the energy is emitted as light. At this time, the emitted light is the fluorescence relevant to this embodiment.

### Kind of Microscope: Confocal Microscope

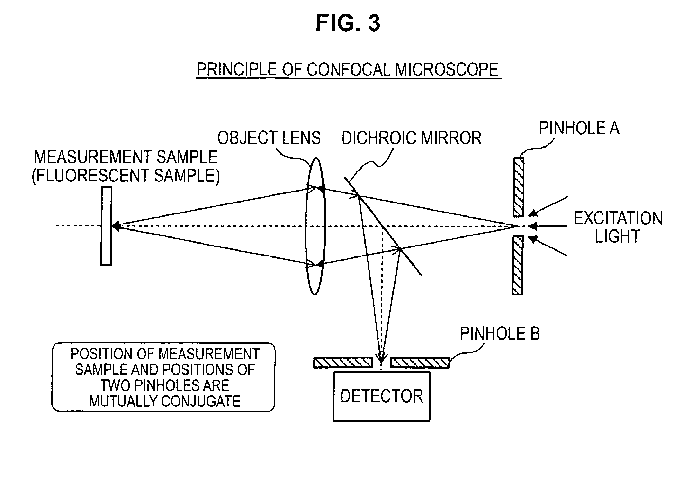

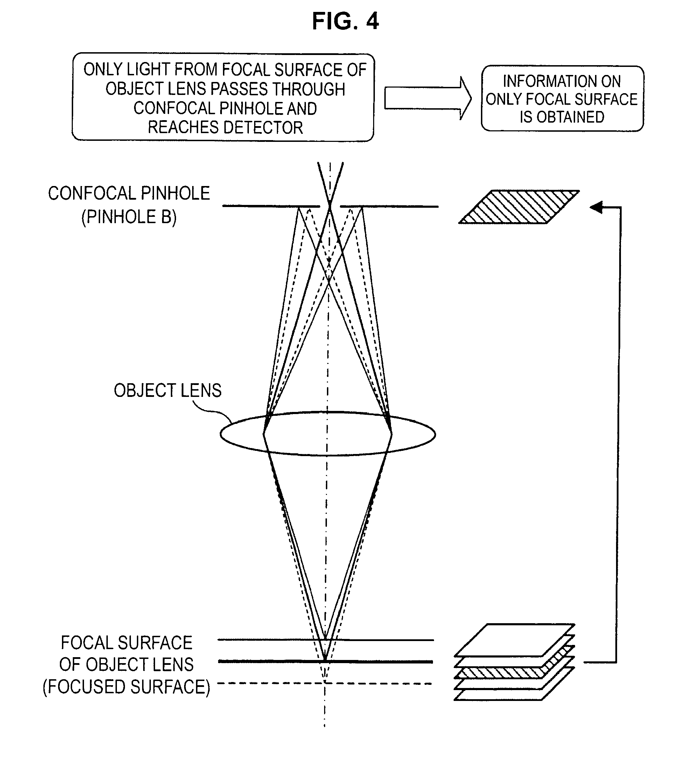

One of the optical microscopes used to observe such fluorescence is a confocal microscope shown in FIGS. 3 and 4. Hereinafter, the principle of the confocal microscope will be described simply with reference to FIGS. 3 and 4. FIGS. 3 and 4 are diagrams illustrating the principle of the confocal microscope.

The confocal fluorescent microscope shown in FIG. 3 has a configuration in which a laser beam used as excitation light is guided up to a measurement sample (fluorescent sample) and the fluorescence generated at a focal surface of the measurement sample is guided up to a detector. The laser beam used as the excitation light can be regarded as a point light source when the laser beam passes through a pinhole A. Therefore, the laser beam passes through a dichroic mirror and an object lens and is projected to the fluorescent sample. The fluorescence is generated in the fluorescent sample by the energy of the projected laser beam, the emitted fluorescence is condensed by the object lens, and then the fluorescence is guided in the direction of the detector by the dichroic mirror. Since the pinhole B is installed immediately before the detector, the fluorescence passing through the pinhole B is detected by the detector such as a photomultiplier tube (PMT).

Here, the wavelength of the laser beam used as the excitation light can be appropriately selected depending on, for example, a kind of fluorescent pigment used to dye the measurement sample. The wavelength of the laser beam is not limited to a specific wavelength.

In such a confocal fluorescent microscope, the installation position of the pinhole A, the projection position (the focal surface of the measurement sample) of the point light source, and the installation position of the pinhole B have an optical conjugation relation. The conjugation relation of the three points is referred to as a confocal relation.

At this time, as shown in FIG. 4, the fluorescence emitted from a focal surface (focused surface) of the object lens is condensed by the object lens, and then passes through the confocal pinhole (the pinhole B in FIG. 3). However, the fluorescence from an unfocused portion may not pass through the confocal pinhole. As a result, in the confocal fluorescent microscope, luminance information can be obtained only from a focused portion of the measurement sample. Accordingly, the two-dimensional image (optical tomographic image) can be constructed only in a focused portion by scanning the planar surface (sample surface) of the measurement sample in vertical and horizontal directions. Further, an optical tomographic image set (three-dimensional enlarged-image group) at each depth position can be obtained by repeatedly scanning the sample surface, while changing the focal position, and accumulating the fluorescence from the measurement sample at different depth positions.

### Kind of Microscope: Two-Photon Excitation Microscope

A two-photon excitation microscope can also be used as another microscope capable of obtaining a three-dimensional image.

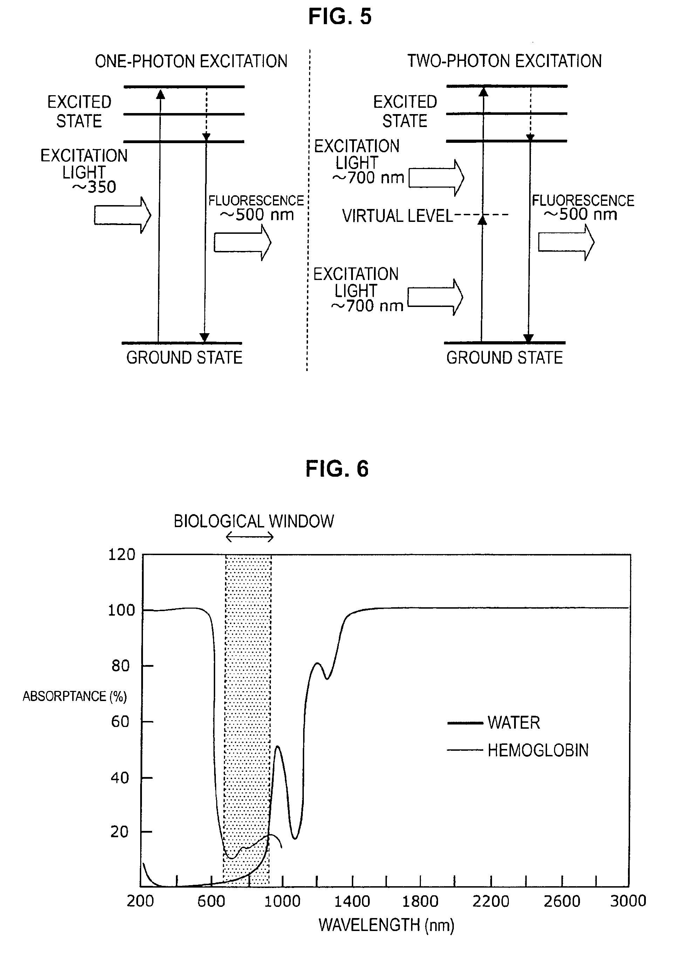

FIG. 5 is a diagram illustrating the principle of two-photon excitation. The drawing on the left side of FIG. 5 shows the general fluorescence principle described above. When molecules are excited by excitation light (in the drawing, excitation light with a wavelength of 350 nm) with a given wavelength, the fluorescence (in the drawing, fluorescence with a wavelength of 500 nm) with a wavelength longer than the excitation light is emitted. In a scheme for generating the fluorescence, fluorescence is generated when the molecule is excited by interaction between one photon and one molecule. Accordingly, this scheme is called fluorescence generation by one-photon excitation.

On the other hand, as shown in the drawing on the right side of FIG. 5, a molecule is excited by another photon while the molecule is excited to a virtual level by one photon. Then, the molecule is excited to a given excited state and fluorescence is thus generated when the molecule is transitioned to the ground state. The scheme for generating the fluorescence is a scheme in which the molecule is excited and the fluorescence is generated by interaction between two photons and the molecule. Therefore, this scheme is called fluorescence generation by two-photon excitation. When the fluorescence generation by two-photon excitation is used, fluorescence with a wavelength shorter than that of excitation light can be generated (in the example of FIG. 5, the fluorescence with the wavelength of 500 nm is generated when infrared light with the wavelength of 700 nm is used as excitation light).

To establish the two-photon excitation, a molecule should collide with another photon and transition to a singlet excited state within a very short time of about 1.0×10⁻¹⁶ seconds, that is, a time in which the molecule colliding with a first photon is excited to the virtual level. Therefore, since a high photon density is necessary, a laser light source capable of outputting high peak power is used. Since a radiated fluorescence signal is very weak compared to the one-photon excitation course, it is necessary to use an optical system in which loss is small or a detector which has high sensitivity.

The reason for using the two-photon excitation fluorescent microscope despite the above-mentioned disadvantages is that the fluorescent wavelength of a infrared band of about 700 nm to about 1000 nm used for the two-photon excitation is a wavelength band called a "biological window" in which light with this wavelength is transmitted through a biological subject without being absorbed by water or hemoglobin, as in FIG. 6. Due to high permeability of the excitation light, a biological subject can be observed up to only about 100 µm with the confocal fluorescence microscope, but can be observed up to about 1000 µm (1 mm) with the two-photon excitation microscope.

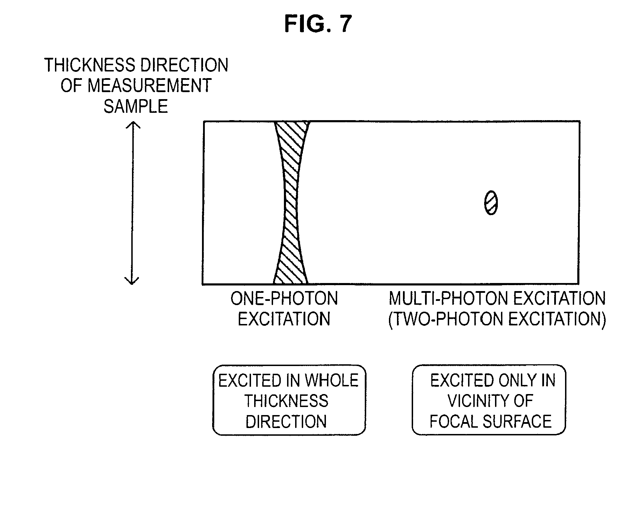

As shown in FIG. 7, in a one-photon excitation fluorescent microscope, molecules are excited in the whole thickness direction of a sample in addition to a confocal surface and fluorescence is emitted in the whole thickness direction. In a two-photon excitation fluorescent microscope, however, molecules are excited only in the vicinity a focal surface. Therefore, a deeper portion of a sample can be brightly observed. Moreover, even when scanning is performed on another focal surface in the vertical and horizontal directions, fluorescence regress or damage caused due to light can be suppressed to a minimum. Further, since a phototoxic property can be suppressed to a minimum due to the same reason, living cells at deep positions of a sample can be observed for a long time.

Therefore, in the two-photon fluorescent microscope, the fluorescence emitted by excitation comes from minute regions inside a sample. Therefore, a fluorescent image can be obtained when all of the light signals of the minute regions are detected. Thus, in the two-photon excitation fluorescent microscope, a detection optical system in a microscope can be simplified. That is, since fluorescence is emitted only from a sample in the vicinity of a focal position in the two-photon excitation course, it is not necessary to cut an unnecessary signal using a pinhole, as in a confocal fluorescent microscope. A detector may be disposed in the vicinity of the sample and as many fluorescent signals diffusing in all directions as possible may be picked up.

### Scanning Method in Microscope

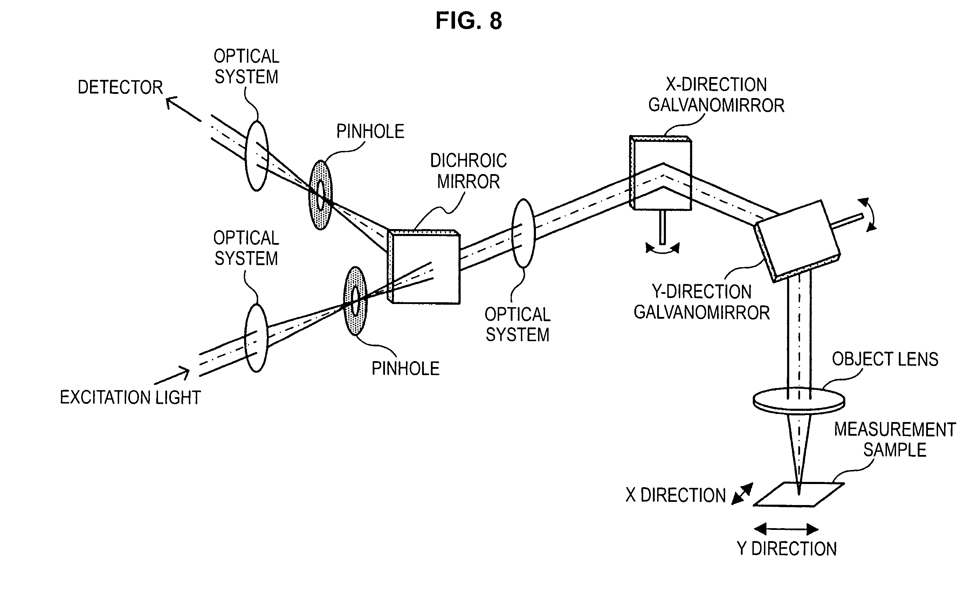

In many cases, the laser scanning-type microscopes described above acquire a two-dimensional image (optical tomographic image) by performing scanning in the X and Y directions (vertical and horizontal directions) of a measurement sample using two kinds of galvanomirrors. FIG. 8 is a diagram illustrating an example of the configuration of a confocal fluorescent microscope using two kinds of galvanomirrors.

The excitation light emitted from the laser light source is transmitted through an optical system such as a lens and a pinhole disposed at a conjugation position, and then is transmitted through a dichroic mirror that simultaneously transmits the excitation light and reflects the fluorescence. The excitation light transmitted through the dichroic mirror is transmitted through an optical system such as a lens, the X coordinate is controlled by an X-direction galvanomirror that controls scanning in the X direction of the measurement sample, the Y coordinate is controlled by a Y-direction galvanomirror that controls scanning in the Y direction of the measurement sample, and the excitation light is condensed at desired XY coordinates on the measurement sample by an object lens.

The fluorescence emitted from the measurement sample is reflected by the Y-direction galvanomirror and the X-direction galvanomirror, is retraced along the same path as the excitation light, and then is reflected by the dichroic mirror. The fluorescence reflected by the dichroic mirror is transmitted through the pinhole installed at the conjugation position, and then is guided to a detector such as a PMT.

Here, the two galvanomirrors used to control the condensation position of the measurement sample are elements that have a rotation shaft connected to a mirror, as schematically illustrated in FIG. 8. The galvanomirror is able to change an angle at which a mirror surface is oriented with high speed and high accuracy by controlling a rotation amount of the rotation shaft in accordance with the magnitude of an input voltage.

In the laser scanning-type microscope shown in FIG. 8, methods of moving excitation light in a process of performing the scanning on the XY plane of the measurement sample are different depending on a combination of the operation method of the two galvanomirrors. As the scanning method, as described below, there are two kinds of methods: a raster scanning method and a zigzag scanning method. In the microscope according to this embodiment, the scanning methods to be described below can be used appropriately.

### - Raster Scanning Method

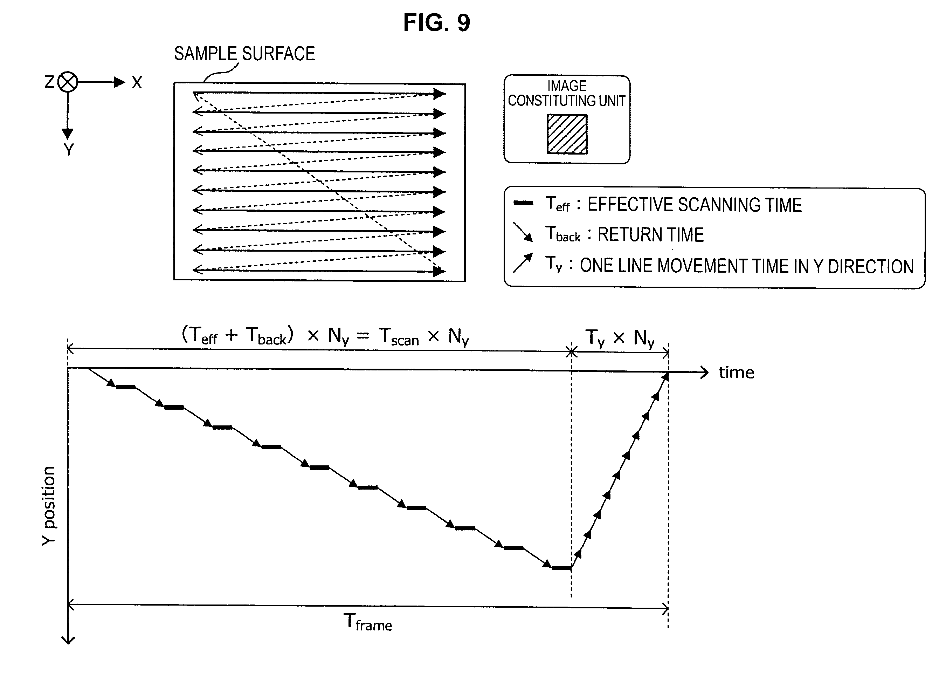

First, a method of generating a two-dimensional image using a raster scanning method will be described with reference to FIG. 9.
In the following description, for example, the operation speed of the galvanomirror controlling the scanning in the X direction is assumed to be faster than that of the galvanomirror controlling the scanning in the Y direction on a sample surface on which a coordinate system shown in FIG. 9 is defined.

The drawing shown in the upper end of FIG. 9 schematically shows how excitation light is moved in the X and Y directions when an upper left portion of the sample surface is set as a start point of the scanning.
In the raster scanning method, as shown in the upper end of FIG. 9, the fluorescence is detected (that is, an image is acquired) while the X-direction galvanomirror is rotated in the X direction and the excitation light is thus moved in the X direction from the left end of the sample surface to the right end thereof. In the raster scanning method, the Y-direction galvanomirror stops during the operation period of the X-direction galvanomirror.

When the excitation light reaches the right end of the sample surface, the detection of the fluorescence is interrupted and the rotation angle of the rotation shaft of the X-direction galvanomirror is changed up to the position corresponding to the left end of the sample surface. During this period, the Y-direction galvanomirror is moved by one line in a stepped manner in the positive Y direction. When the excitation light reaches the right lower portion of the sample surface by repeating such operations by the number of lines, one two-dimensional image (frame) is generated by considerably rotating the rotation shafts of the X-direction galvanomirror and the Y-direction galvanomirror and returning the X-direction galvanomirror and the Y-direction galvanomirror to the start point of the scanning.

In such a raster scanning method, the Y-direction galvanomirror stops while the X-direction galvanomirror operates. Therefore, a unit (image constituting unit) constituting a two-dimensional image to be generated has a rectangular shape, as shown in FIG. 9.

The graph shown in the lower end of FIG. 9 is a timing chart that shows how the Y coordinate is changed over time. When it is assumed that T_{frame} is a time necessary to obtain a one-frame image, this time is expressed by Equation 11 below, as apparent from the timing chart illustrated in the lower end of FIG. 9. In Equation 11 below, it is assumed that T_{scan} is a scanning period, N_{y} is the number of lines in the Y direction, and T_{Y_all} is a return time in the Y direction.

${T}_{frame} = \left({T}_{scan}\right) \times {N}_{y} + {T}_{Y_all}$

Here, the scanning period T_{scan}, an effective scanning time T_{eff}, and a return time T_{back} have a relation expressed by Equation 12 below. Further, the return time T_{Y_all} in the Y direction can be expressed as in Equation 13 below, when it is assumed that T_{y} is a one-line movement time in the Y direction. In Equation 12, the return time T_{back} refers to a sum time necessary for the movement from the final effective scanning section (for example, the section indicated by a solid line on the sample surface shown in the upper end of FIG. 9) to the initial effective scanning section of the subsequent period.

${T}_{eff} = {T}_{scan} - {T}_{back}$ ${T}_{Y_all} = {T}_{y} \times {N}_{y}$

For example, a case in which a scanning frequency F_{scan} of the X-direction galvanomirror is 7.8 kHz will be considered. In this case, since the scanning period T_{scan} is the reciprocal of the scanning frequency F_{scan}, T_{scan} = 1/F_{scan} = 1.28×10⁻⁴ seconds is satisfied. Further, when the effective scanning time T_{eff} of the X-direction galvanomirror is expressed as {scanning period T_{scan}×(1/3)} based on a scanning efficiency, the effective scanning time is 4.27×10⁻⁵ seconds and the return time T_{back} is 1.28×10⁻⁴-4.27×10⁻⁵ = 8.53×10⁻⁵ seconds.

Further, when the return time T_{y} in the Y direction in the Y-direction galvanomirror is 1×10⁻⁶ and the number of lines N_{y} in the Y direction is 512, the time T_{frame} necessary to photograph one frame is 6.62×10⁻² seconds from Equation 11 above. Since the frame rate is the value expressed as the reciprocal of T_{frame}, Frame_rate is equal to 15.1 (frame/s) in such a scanning system.

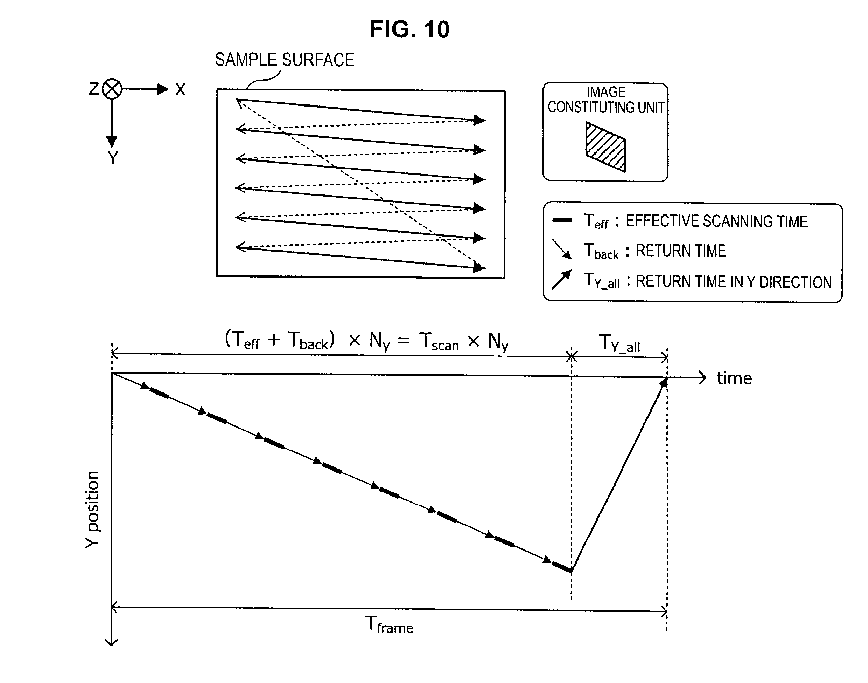

The raster scanning method described with reference to FIG. 9 is a basic scanning method. However, for example, when there is a constraint on the return time T_{back} necessary for the Y-direction galvanomirror or the position of the X-direction galvanomirror is changed periodically, the operation may not be able to wait until the completion of the stepped movement in the Y direction in some cases. Accordingly, a raster scanning method which is an improvement method of the raster scanning method described with reference to FIG. 9 can be utilized as in FIG. 10.

The drawing shown in the upper end of FIG. 10 schematically shows how excitation light is moved in the X and Y directions when an upper left portion of the sample surface is set as a start point of the scanning.
In the raster scanning method shown in FIG. 10, the fluorescence is detected (that is, an image is acquired) while the X-direction galvanomirror is rotated and the excitation light is thus moved in the X direction from the left end of the sample surface to the right end thereof. When the excitation light reaches the right end of the sample surface, the detection of the fluorescence is interrupted and the rotation angle of the rotation shaft of the X-direction galvanomirror is changed up to the position corresponding to the left end of the sample surface. Further, in this raster scanning method, the Y-direction galvanomirror operates at a constant speed even during the operation period of the X-direction galvanomirror, as in the timing chart shown in the lower end of FIG. 10.

When the excitation light reaches up to the right lower portion of the sample surface by repeating such operations by the number of lines, one two-dimensional image (frame) is generated by considerably rotating the rotation shafts of the X-direction galvanomirror and the Y-direction galvanomirror and returning the X-direction galvanomirror and the Y-direction galvanomirror to the start point of the scanning.

In such a raster scanning method, the Y-direction galvanomirror operates even when the X-direction galvanomirror operates. Accordingly, a unit (image constituting unit) constituting a two-dimensional image to be generated has a shape in which the vertical and horizontal directions of the image constituting unit are not perpendicular to each other, as in FIG. 10.

In this case, the frame rate can be calculated in the same way as in the raster scanning method described with reference to FIG. 9. When the galvanomirror having the same performance as in the example of FIG. 9 is used, the frame rate is 15.2 (frame/s) on the assumption that T_{Y_all} is 200 µs.

### - Zigzag Scanning Method

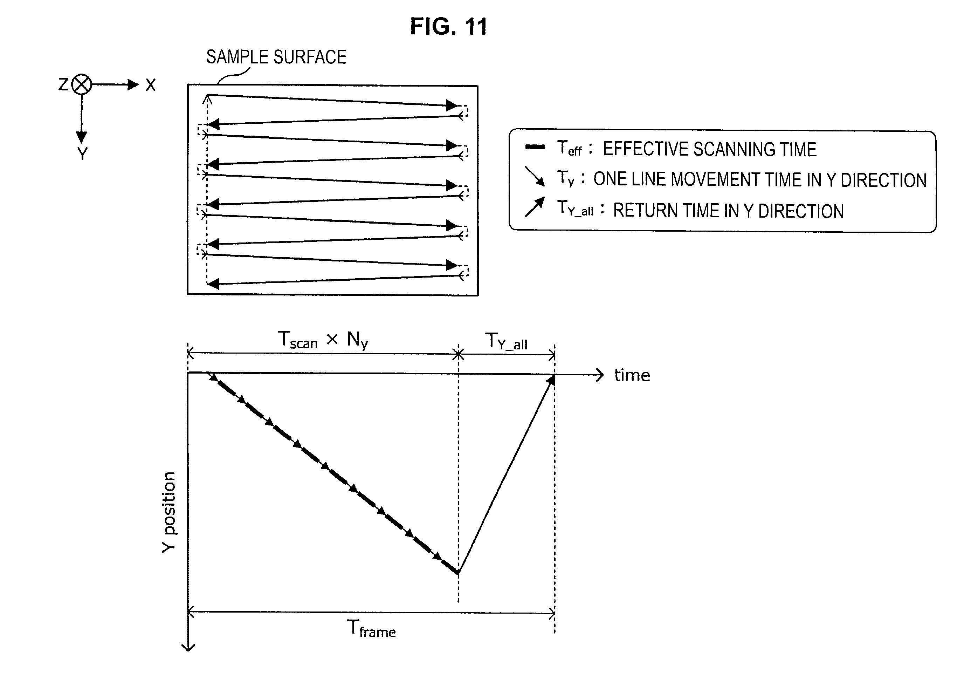

To improve the frame rate of the raster scanning method described with reference to FIG. 10, a zigzag scanning method shown in FIG. 11 can be utilized.
As shown in the drawing in the upper end of FIG. 11, the zigzag scanning method is different from the raster scanning method described with reference to FIG. 10 in that the fluorescence is detected not only when the X-direction galvanomirror moves the excitation light from the left end of the sample surface to the right end thereof, but also when the X-direction galvanomirror moves the excitation light from the right end to the left end.

In the zigzag scanning method, the detection of the fluorescence stops until the completion of the direction change of the excitation light, whenever the excitation light reaches the right end or the left end. Even in this case, the Y-direction galvanomirror is moved at a constant speed, as in the timing chart shown in the lower end of FIG. 11. When the excitation light reaches the left lower portion of the sample surface by repeating such operations by the number of lines, one two-dimensional image (frame) is generated by considerably rotating the rotation shaft of the Y-direction galvanomirror and returning the Y-direction galvanomirror to the start point.

In the zigzag scanning method, the return time T_{back} can be expressed, as in Equation 14 below. Accordingly, the time T_{frame} necessary for obtaining a one-frame image is expressed, as in Equation 15 below.

${T}_{back} = \left({T}_{scan}/2\right) - {T}_{eff}$ ${T}_{frame} = \left({T}_{eff}+{T}_{back}\right) \times {N}_{y} + {T}_{Y_all}$

Here, when the galvanomirror having the same performance as in the example of FIG. 9 is used, T_{frame} is 30.3×10⁻² seconds and the frame rate is thus 30.3 (frame/s) on the assumption that T_{Y_all} is 200 µs.

### - Scanning Method of Depth Direction

The confocal fluorescent microscope or the two-photon excitation fluorescent microscope that is usable as the microscope 20 according to this embodiment can acquire images in another depth direction (Z direction) by changing the focal position, as described above. In such a microscope, the movement of the focal position can be realized by changing the position of the object lens by an actuator such as a step motor.

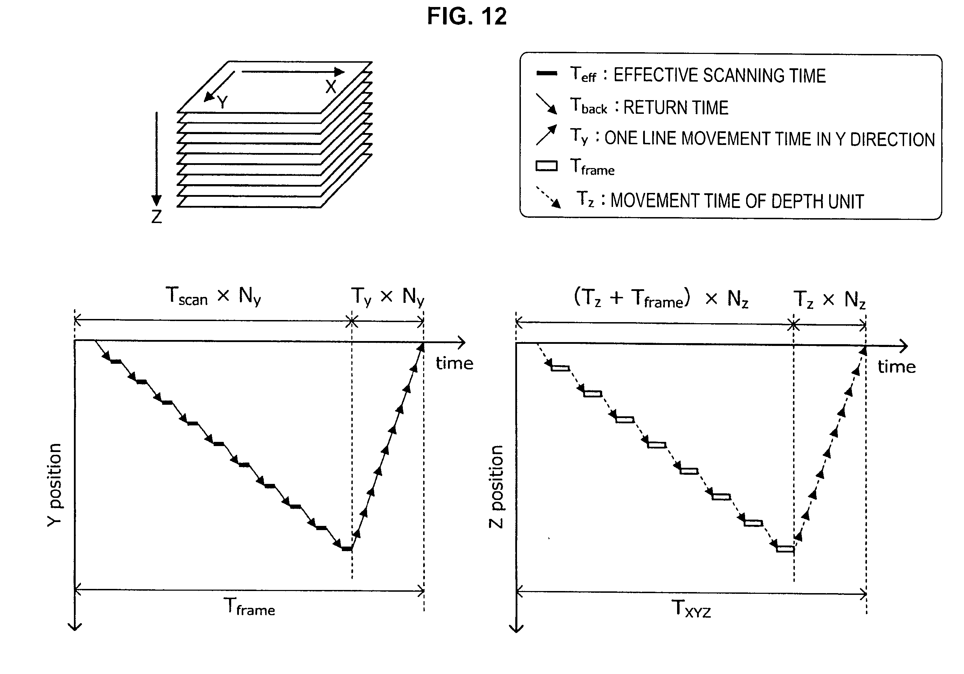

FIG. 12 is a diagram illustrating a method of detecting the fluorescence by intermittently changing the focal position. The drawing shown in the upper end of FIG. 12 shows a stack of the acquired two-dimensional images and the acquired three-dimensional images. The drawing shown in the lower left of FIG. 12 is a timing chart when a one-frame image is generated, as in the timing chart shown in FIG. 9.

The drawing shown in the lower right of FIG. 12 is a timing chart corresponding to one stack of the images. In the intermittent movement method, the focal position is fixed while a one-frame image is generated. When the generation of the one-frame image ends, the focal position is moved for a time T_{z}. Further, in the intermittent movement method, the actuator is repeatedly returned to the original focal position, whenever the photographing of an N_{z} frame ends.

Here, when it is assumed that the movement time T_{z} of a depth unit is 0.1 seconds, a number N_{z} in the depth direction is 20, and a generation time T_{frame} of the one-frame image is 3.30×10⁻² seconds, a time T_{XYZ} necessary for generating one stack of the images can be expressed by Equation 21, as shown in the timing chart in the lower right side of FIG. 12. When the above-mentioned values are substituted into Equation 21, the time T_{XYZ} of this case is 4.67 seconds. Further, a 3D stack rate can be calculated as the reciprocal of the time T_{XYZ} and is 0.21 (stack/s) in this example.

${T}_{XYZ} = \left({T}_{z}+{T}_{frame}\right) \times {N}_{z} + {T}_{z} \times {N}_{z}$

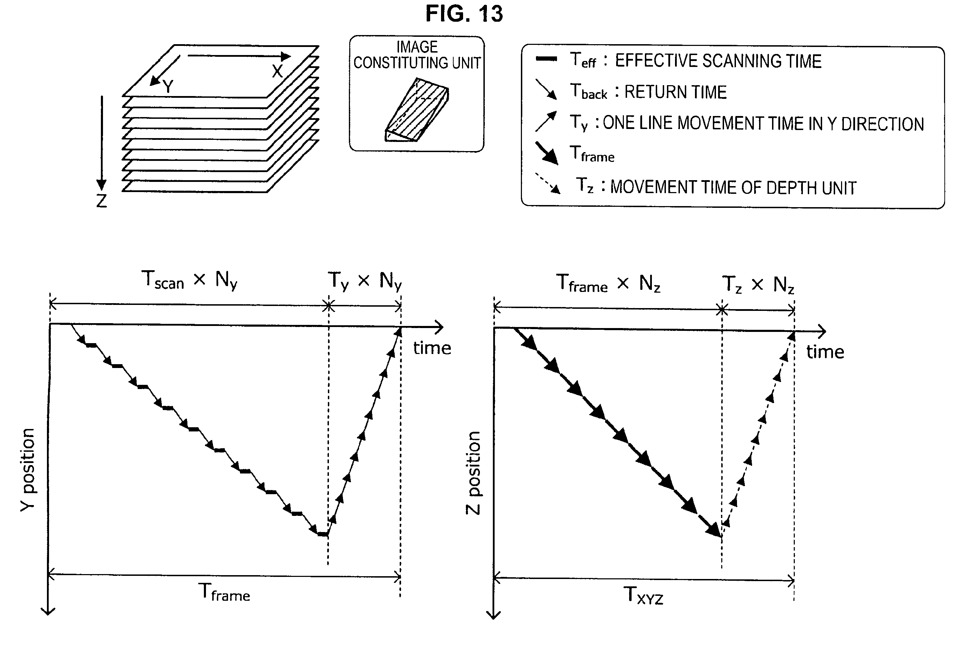

Further, to increase the 3D stack rate, for example, the focal position in the Z direction can be controlled to be moved continuously, as in FIG. 13. In this case, as shown in the drawing on the lower right side of FIG. 13, this continuous movement method is different from the intermittent movement method shown in FIG. 12 in that the focal position is continuously changed in the Z direction even while the two-dimensional image is generated.

In such a continuous movement method, the actuator operates to perform the movement process in the Z direction, even while the X-direction galvanomirror and the Y-direction galvanomirror operate. Therefore, the Z coordinate of a unit (image constituting unit) constituting a two-dimensional image to be generated is not constant, but is inclined in the Z-axis direction, as shown in FIG. 13.

In such a continuous movement method, the time T_{XYZ} necessary to generate one stack of images can be expressed by Equation 22 below, as shown in the timing chart of FIG. 13. When the same parameters (performance characteristics) as those of FIG. 12 are realized, the time T_{XYZ} of this example is 2.67 seconds. Further, the 3D stack rate can be calculated as the reciprocal of the time T_{XYZ} and is 0.37 (stack/s) in this example. As apparent from this result, the speed can be improved by about 75%, compared to the intermittent movement method, by controlling the focal position in accordance with the continuous movement method.

${T}_{XYZ} = {T}_{frame} \times {N}_{z} + {T}_{z} \times {N}_{z}$

The microscopes according to this embodiment have been described in detail with reference to FIGS. 2 to 13.

### Binocular Stereoscopic Display of Microscope Image

Next, before the information processing apparatus 10 according to this embodiment is described, the review of the inventors will be described in brief with regard to a method of realizing a binocular stereoscopic view of the enlarged-image group (microscope image) generated by a microscope.

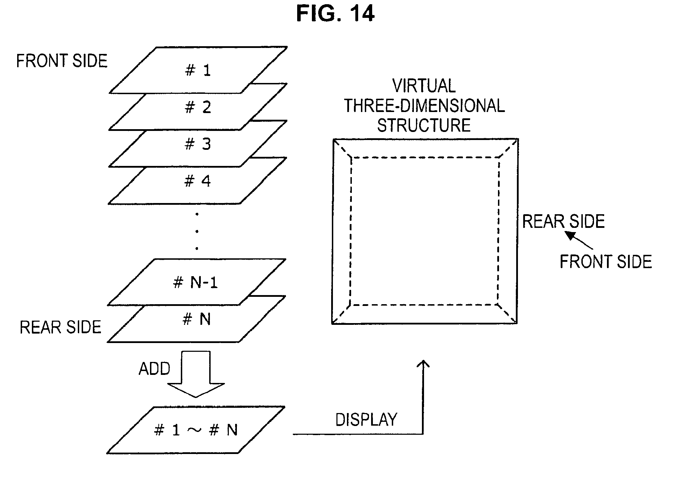

To realize a 3D display apparatus such as a television capable of displaying a binocular stereoscopic view, three-dimensional images generated by a fluorescent microscope are generated by simply adding the luminance values of pixels with the same XY coordinates and different Z coordinates, as shown in FIG. 14. At this time, a process of correcting a dynamic range is performed without overflow of the added luminance values. After these processes are performed, the images are superimposed sequentially from the front side to the rear side to form a virtual three-dimensional structure, as in the drawing on the right side of FIG. 14. Thereafter, a two-dimensional image viewed from any viewpoint with one eye is generated and displayed on a display screen.

In the display method shown in FIG. 14, three-dimensional position information can be comprehended by changing the viewpoint of the still three-dimensional image. However, it is difficult to comprehend the change in the position relation of a three-dimensional moving image acquired with the fluorescent microscope according to time.

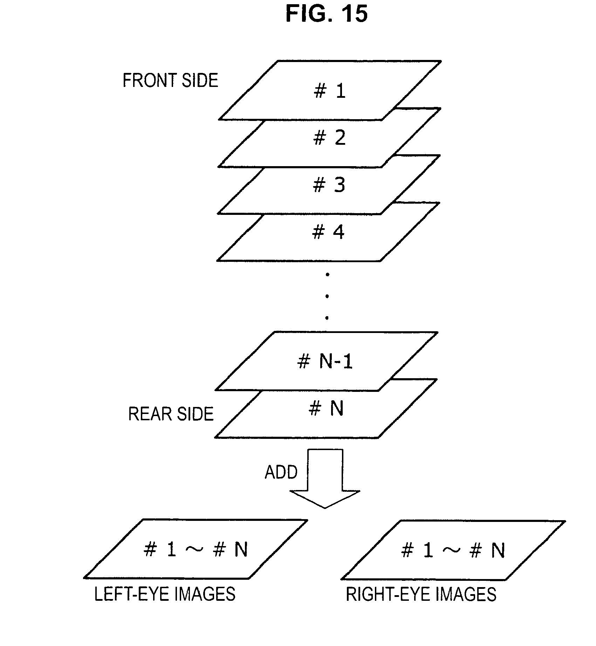

In recent years, televisions capable of alternately displaying right-eye and left-eye images and realizing a binocular stereoscopic view using liquid crystal shutter glasses have come into general use. Accordingly, the inventors and others have examined a method of generating a binocular stereoscopic image (a still image or a moving image) by effectively using three-dimensional information that a fluorescent microscope has, and thus has devised a method of generating right-eye and left-eye images using a microscope image, as schematically illustrated in FIG. 15.

In the two-dimensional display of the microscope image shown in FIG. 14, information regarding the depth direction of the display image is lost. Therefore, it is difficult to comprehend the actual distance of a measurement sample (for example, cells). Further, even when the virtual three-dimensional structure is constructed and displayed with a different viewpoint, the actual distance between cells present within the field of view can be known by viewing the cells at different angles over time. However, time information and depth information may not be simultaneously known. However, a microscope image can be displayed stereoscopically in a 3D display apparatus by generating binocular stereoscopic right-eye and left-eye images based on the microscope image, as shown in FIG. 15. Therefore, a change in the three-dimensional distance between the cells present within the field of view can be comprehended. Thus, when the overlapping cells are displayed within the field of view, it is easy to discriminate between the cells located closely and distantly from each other.

However, when the inventors carried out the above-mentioned review, the inventors also found the following problem when binocular stereoscopic image data is generated.
That is, the above-described three-dimensional image stack is not the set of pixels acquired at the same time but the set of pixels acquired at different times. In particular, it takes some time to move the focal position in the Z direction. Therefore, the acquisition times of the upper and lower portions of a screen are different when a three-dimensional image is attempted to be generated from any viewpoint.

When the scanning is performed in a zigzag manner during the continuous movement in the Y direction, for example, as shown in FIG. 11, in order to increase the acquisition speed of the two-dimensional image, a difference between the Y coordinates of the adjacent pixels increases or decreases periodically. Therefore, there is a concern that the shape of a measurement object may not be correctly displayed.

Further, when the focal position is continuously moved in the Z direction, as shown in FIG. 13, in order to increase the acquisition speed of the three-dimensional image stack, the Z coordinate of one two-dimensional image may not be constant, as described above. When a binocular stereoscopic image is generated using such an image, there is a concern that a viewer may not know what the image looks like.

Accordingly, the inventors made further examination to resolve this problem, and thus have resolved this problem by correcting the time axis or the space coordinates of an enlarged-image group generated by a microscope. As a result, as described below, an image can be observed by suppressing a calculation error, and a process of enlarging or reducing an image or changing the position of a viewpoint can be performed interactively without a considerable increase in a calculation load.

### Configuration of Information Processing Apparatus

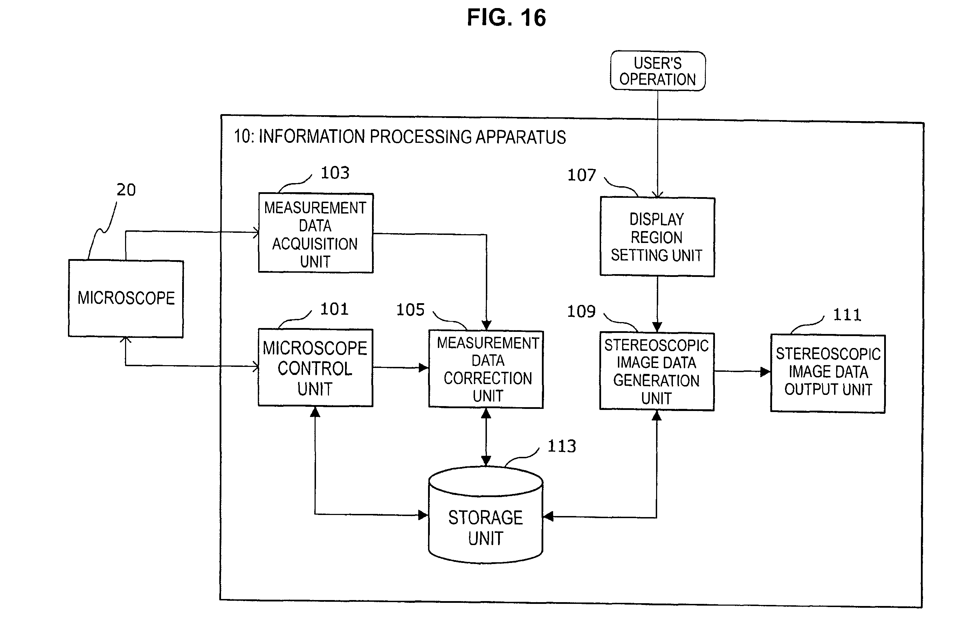

Next, the configuration of the information processing apparatus according to this embodiment will be described in detail with reference to FIGS. 16 to 26.

The information processing apparatus 10 according to this embodiment includes a microscope control unit 101, a measurement data acquisition unit 103, a measurement data correction unit 105, a display region setting unit 107, a stereoscopic image data generation unit 109, a stereoscopic image data output unit 111, and a storage unit 113 as main units.

The microscope control unit 101 is realized by, for example, a central processing unit (CPU), a read-only memory (ROM), a random access memory (RAM), and a communication device. The microscope control unit 101 controls driving devices such as the X-direction galvanomirror, the Y-direction galvanomirror, and a focal-position movement actuator, a laser light source for excitation light, a detector such as a PMT, and the like, which are included in the microscope 20, and causes the microscope 20 to measure a fluorescence enlarged image of a measurement sample set in the microscope 20.

At this time, the microscope control unit 101 controls the microscope 20 so that the spatial acquisition interval of the pixels in the X, Y, and Z directions of the fluorescence enlarged image and the temporal acquisition interval of the pixels are each the same as an acquisition interval that satisfies the Nyquist sampling theorem.

The Nyquist sampling theorem is also called a sampling theorem. According to this sampling theorem, "when a given analog signal is sampled to generate digital data by an AD converter, the analog signal is sampled at a double frequency or more of the maximum frequency contained in the original analog signal to generate discrete digital data, and then the original analog signal can be restored completely by converting the digital data into an analog signal by a DA converter and then removing a high-frequency band component by a filter that passes only a frequency equal to or less than the maximum frequency."

The microscope control unit 101 can correctly calculate the values of pixels in any space coordinates and time from an image stack of the fluorescence enlarged image obtained by the microscope 20 by controlling the microscope 20 such that all of the acquisition intervals in a four-dimensional space defined by X, Y, Z, and time directions satisfy the sampling theorem.

For example, the microscope control unit 101 may refer to various set values, programs, databases, or the like stored in the storage unit 113 to be described below in order to control the microscope 20 such that all of the acquisition intervals in the four-dimensional space satisfy the sampling theorem.

The microscope control unit 101 notifies the measurement data correction unit 105 to be described below of information regarding a scanning method or the like utilized in the microscope to be controlled by the microscope control unit 101. Thus, the measurement data correction unit 105 to be described below can correct data in accordance with the scanning method of the microscope 20.

### Specific Example of Method of Setting Acquisition Interval

Hereinafter, a control method of setting the acquisition interval of the pixels such that the sampling theorem is satisfied will be described exemplifying specific numerical values.

### - Acquisition Interval in X and Y Directions

First, parameters to be considered in setting of an acquisition interval of the pixels will be described. Hereinafter, to facilitate the description, the parameters (specifications of the apparatus) to be described below are assumed to have the following values. The following specific numerical values are merely examples and the values of the parameters are not limited to the following values.

the X-direction galvanomirror: scanning frequency sf = 7.80 (kHz)
   scanning efficiency ef = 0.33333
the number of pixels Nx in the X direction = 512 (pixel)
a numerical aperture NA of the object lens = 0.9
a wavelength X of the laser light source = 500 (nm)

The values of the following parameters (specifications of the apparatus) are not set on the assumption that the values of the parameters have a sufficient margin. In this embodiment, only the movement speed of a measurement sample is sufficiently small and the other parameters are sufficiently large.

LD: the peak power of the laser light source
PMT: the sensitivity of the detector
the AD converter: a sampling frequency fs_adc (MHz)
the measurement sample: a movement speed vs (µm/s) : a fluorescent body efficiency fl_eff
the Y-direction galvanomirror: a movement speed vy (µm/s)
focal adjustment in the Z direction: a movement speed vz (µm/s)

First, the beam speed (the speed of excitation light) in the X-direction galvanomirror is calculated. When it is assumed that sw (m) is the scan width of a beam, the beam is moved only by the scan width sw (m) for a time of ef/sf (s), and thus an average beam speed vg_ave is expressed as in Equation 101 below.

$\begin{matrix}vg_ave & = sw / \left(ef/sf\right) \\ & = \left(sw\times sf\right) / ef \left(m/s\right)\end{matrix}$

Here, the speed or the rotation angle of the X-direction galvanomirror is assumed to be changed according to the trigonometric function. In this case, the average speed of the beam in the range of "±(ef / 2)×2π" which is an effective scanning range is proportional to a value obtained by dividing "2×sin(ef×π)," which is obtained by integrating cosθ from (-ef×π) to (+ef×π), by a range of (ef×2π). Further, since the maximum speed of the beam is proportional to cos(2π) = 1, a ratio (ave2max) between the average speed and the maximum speed is a value expressed by Equation 102 below.

$\begin{matrix}ave ⁢ 2 ⁢ max & = 2 \times sin / \left(ef\times π\right) / \left(ef\times 2⁢π\right) \\ & = sin \left(ef\times π\right) / \left(ef\times π\right) \\ & = 0.8270\end{matrix}$

On the other hand, the minimum speed is proportional to cos(2π / 3) = 1/2, and a ratio (ave2min) between the average speed and the minimum speed is a value expressed by Equation 103 below.

$\begin{matrix}ave ⁢ 2 ⁢ min & = 4 \times sin / \left(ef\times π\right) / \left(ef\times 2⁢π\right) \\ & = 2 \times sin \left(ef\times π\right) / \left(ef\times π\right) \\ & = 1.654\end{matrix}$

By using these ratios, the maximum beam speed (vg_max) can be calculated according to Equation 104 below and the minimum beam speed (vg_min) can be calculated according to Equation 105 below.

$vg_max = vg_ave / ave ⁢ 2 ⁢ max \left(m/s\right)$ $vg_min = vg_ave / ave ⁢ 2 ⁢ min \left(m/s\right)$

Next, frequencies will be reviewed. An optical spatial resolution (ro) is calculated according to Equation 111 below. When the maximum repetition frequency determined by a spatial resolution and a speed is calculated, the maximum value (fo_max) of the maximum repetition frequency is expressed as in Equation 112 below. Further, the maximum repetition frequency (fo_min) in a portion in which the beam speed is the slowest is expressed as in Equation 113 below.

$ro = 0.61 \times λ / NA$ $fo_max = vg_max / ro$ $fo_min = vg_min / ro$

Accordingly, a bandwidth (pmt_bw) of a detector PMT should satisfy the inequality expression expressed by Equation 114 below.

$pmt_bw \geq fo_max$

On the other hand, when the intervals of the sample positions in the X direction are equalized, Nx samples are generated for a time (ef/sf). Therefore, the average sampling frequency (fs_ave) is expressed as in Equation 115 below. Accordingly, the maximum sampling frequency (fs_max) is expressed as in Equation 116 in which the average sampling frequency is divided by the ratio (ave2max) between the average speed and the maximum speed. Likewise, the minimum sampling frequency (fs_min) is expressed as in Equation 117 in which the average sampling frequency is divided by the ratio (ave2min) between the average speed and the minimum speed.

$fs_ave = Nx / \left(ef/sf\right) ⁢ \left(sample/s\right)$ $fs_max = Nx / \left(ef/sf\right) / ave ⁢ 2 ⁢ max$ $fs_min = Nx / \left(ef/sf\right) / ave ⁢ 2 ⁢ min$

Accordingly, when the sampling theorem is considered, the minimum sampling frequency (fs_min) may satisfy a relation indicated by Equation 118 below.

$fs_min \geq 2 \times pmt_bw$

Specifications necessary to realize the optical resolution ro expressed by Equation 111 will be considered based on the above-described review.
First, based on the sampling theorem, it is necessary to perform the sampling at a spatial frequency equal to or greater than twice the optical resolution. To facilitate the description, when it is supposed that the sampling is performed at four times the optical resolution, the scan width sw is a value expressed by Equation 121 below.

$\begin{matrix}sw & = Nx \times \left(ro/4\right) \\ & = 512 \times 0.61 \times \left(500\times {10}^{- 9}/0.9/4\right) \\ & = 43.4 \left(μm\right)\end{matrix}$

The bandwidth (pmt_bw) of the detector PMT is a value expressed by Equation 122 below from Equation 114 above.

$\begin{matrix}pmt_bw \geq fo_max & = vg_max / ro \\ & = vg_ave / ave ⁢ 2 ⁢ max / ro \\ & = sw \times sf / ef / ave ⁢ 2 ⁢ max / ro \\ & = 3.62 \left(MHz\right)\end{matrix}$

Here, the maximum sampling frequency (fs_max) is a value expressed by Equation 123 below from Equation 102 and Equation 116 above. The minimum sampling frequency (fs_min) is a value expressed by Equation 124 below from Equation 117 above.

$\begin{matrix}fs_max & = 512 \times 3 \times 7.8 \times {10}^{3} / 0.8270 \\ & = 14.5 \left(MHz\right)\end{matrix}$ $\begin{matrix}fs_min & = 512 \times 3 \times 7.8 \times {10}^{3} / 1.6540 \\ & = 7.24 \left(MHz\right)\end{matrix}$

Accordingly, when the calculated values are substituted into Equation 118 above, it can be understood that the condition of the sampling theorem expressed by Equation 118 above is satisfied.

The result obtained in the above-described specific example will now be focused on.
When the control based on the calculation result is attempted to be realized, it is necessary to use a low pass filter (LPF) that completely passes a frequency equal to or less than 3.62 MHz and does not pass a frequency equal to or greater than 3.62 MHz at all. Here, to perform the control more reliably, any one of two countermeasures to be described below can be performed.

[Countermeasure 1] To slightly decrease the bandwidth of a signal, the bandwidth of the detector is lowered or the frequency of the LPF is increased so that the bandwidth of 3.0 MHz is used. Further, the range of 43.4×3/3.62 = 36 (µm) in which the scan width is narrowed to that degree is observed at the optical resolution.

[Countermeasure 2] The number of pixels Nx = 512 is set to be slightly larger. For example, when Nx = 600 (pixels) is set, the minimum sampling frequency (fs_min) = 8.49 (MHz) is obtained. In this case, the microscope system in which the range of 43.4 (µm) is observed at the optical resolution can be realized by combining the detector with the bandwidth of 3.62 MHz and the LPF with the cutoff frequency of 4 MHz.

In the above-described specific example, the review has been described in detail by exemplifying the galvanomirrors in which the high scanning frequency of 7.80 (kHz) is set and the speed or the rotation angle is changed according to the trigonometric function. However, when an image may not be acquired at high speed, a general galvanomirror to be described below may be used. The follow-up speed of the general galvanomirror to be described below is restricted. However, since the general galvanomirror is a device that follows up an angle in accordance with an input voltage, the speed can be controlled to be constant in the effective scanning range.

the X-direction galvanomirror: a scanning frequency sf = 780 (Hz)
   a scanning efficiency ef = 0.33333
the number of pixels Nx in the X direction = 512 (pixels)
a numerical apertures NA of the object lens = 0.9
a wavelength λ of the laser light source = 500 (nm)

In this case, when it is assumed that sw (m) is the scan width of a beam, a beam speed (vg) is constant and is expressed as in Equation 131 below.

$\begin{matrix}vg & = sw / \left(ef/sf\right) \\ & = \left(sw\times sf\right) / ef \left(m/s\right)\end{matrix}$

Since the optical spatial resolution ro is expressed by Equation 111 above, the maximum repetition frequency (fo) is expressed by Equation 132 below. Accordingly, the bandwidth (pmt_bw) of the detector PMT should satisfy a condition expressed by Equation 133 below.

$fo = vg / ro$ $pmt_bw \geq fo$

Here, when the intervals of the sample positions in the X direction are equalized, Nx samples are generated for a time (ef/sf). Therefore, the sampling frequency (fs) is expressed as in Equation 134 below.

$fs = Nx / \left(ef/sf\right) ⁢ \left(sample/s\right)$

Accordingly, to satisfy the sampling theorem, the sampling frequency (fs) may satisfy a condition expressed by Equation 135 below.

$fs \geq 2 \times pmt_bw$

Specifications necessary to realize the optical resolution ro expressed by Equation 111 above using the general galvanomirror will be considered.
First, based on the sampling theorem, it is necessary to perform the sampling at a spatial frequency equal to or greater than twice the optical resolution. To facilitate the description, when it is supposed that the sampling is performed at four times the optical resolution, the scan width sw is sw = 43.4 (µm), as in Equation 121 above.

The bandwidth (pmt_bw) of the detector PMT is a value expressed by Equation 136 below from Equation 114 above.

$\begin{matrix}pmt_bw \geq & fo = vg / ro \\ & = sw \times sf / ef / ro \\ & = 0.3 \left(MHz\right)\end{matrix}$

At this time, the sampling frequency fs is fs=512×3×7.8×10²=1.2 (MHz) and thus is constant. Since this value is four times the bandwidth of the detector PMT, the microscope system in which the range of 43.4 (µm) is observed at the optical resolution can be realized, for example, by using the LPF with the cutoff frequency of 0.45 MHz corresponding to 1.5 times of the bandwidth of the detector.

As described above, by using whether the sampling theorem is satisfied as the determination reference, the optical resolution can be used as far as possible in accordance with the characteristics of the galvanomirror to be used and the bandwidth of the detector PMT and the cutoff frequency of the LPF necessary for observation of a wide range can be specified.

The case in which the scanning is performed in the X direction giving an example has been described in detail. However, the bandwidth and the frequency can be specified at the scan width sw and by the number of pixels Ny for the sampling performed in the Y direction as well.

### - Acquisition Interval in Z Direction

The acquisition interval in the Z direction can be specifically reviewed by focusing on a relation between the resolution of the X and Y directions and the resolution of the Z direction in a microscope (for example, a confocal microscope or a two-photon excitation microscope) to be used.

For example, in the confocal microscope, a relation between the radius of a confocal pinhole and a resolution of a horizontal direction (that is, the resolution of the X and Y directions) and a relation between the radius of a confocal pinhole and a resolution of an optical axis direction (that is, the resolution of the Z direction) can be measured specifically. According to the knowledge obtained from the measurement result, it is apparent that the resolution of the Z direction is about twice the resolution of the X and Y directions in the confocal microscope. Accordingly, a position in the Z direction may be changed so that the sampling interval in the X and Y directions is doubled.

Likewise, in a two-photon excitation microscope, when a relation between the resolution of the X and Y directions and the resolution of the Z direction is focused on, it is apparent that the resolution of the X and Y directions is about 1/3 of the resolution of the Z direction. Accordingly, in the two-photon excitation microscope, a position in the Z direction may be changed so that the sampling interval in the X and Y directions is tripled.

### - Acquisition Interval on Time Axis

Next, the temporal resolution and an acquisition interval on a time axis will be considered.
It is assumed that vs (m/s) is the maximum movement speed of a measurement object. Further, when it is assumed that ro (m) is the optical resolution, as in Equation 111 above, the maximum repetition frequency (ft_max) has a value expressed by Equation 141 below.

$ft_max = vs / ro \left(Hz\right)$

For example, as shown in FIG. 12, one two-dimensional image is acquired by scanning a beam (excitation light) in the X and Y directions, and then a focal position is moved to generate another image with a different Z coordinate. When it is assumed that T_{XYZ} (seconds) is a time necessary to acquire a three-dimensional image stack, an acquisition time interval of images which are the same as each other three-dimensionally in the X, Y, and Z directions is T_{XYZ}. When the sampling frequency is a frequency equal to or greater than twice the maximum repetition frequency, the sampling theorem can be satisfied. Therefore, Equation 142 below may be satisfied.

$1 / {T}_{XYZ} \geq 2 \times \left(vs/ro\right) ⁢ \left(Hz\right)$

Here, when 4.67 (seconds) calculated using NA = 0.9, λ = 500 (nm), and ro = 339 (nm) as specific numerical values in the example of FIG. 12 is used as the value of the time interval T_{XYZ}, it is known that the measurement can be performed while satisfying the sampling theorem as long as the maximum movement speed vs of the measurement object satisfies a value expressed by Equation 143 below.

$vs < ro / \left(2\times {T}_{XYZ}\right) = 36.2 \left(nm/s\right)$

Further, on the assumption that 2.67 (seconds) calculated in the example of FIG. 13 is used as the value of the time interval T_{XYZ}, it is known that the measurement can be performed while satisfying the sampling theorem as long as the maximum movement speed vs of the measurement object satisfies a value expressed by Equation 144 below.

$vs < ro / \left(2\times {T}_{XYZ}\right) = 36.4 \left(nm/s\right)$

For example, when it is desired to measure an object with a movement speed equal to or greater than the above-mentioned movement speed, such as a cell tissue changed at high speed, the number of two-dimensional images acquired by changing the Z coordinate may be reduced to measure the object. For example, when it is desired to measure an object for which vs = 100 (nm/s), the time interval T_{XYZ} may be reduced to about 2/3. Therefore, the number of two-dimensional images is reduced to 13 from the 20 which are set in the specific example of FIG. 12.

The control method of setting the acquisition interval of the pixels such that the sampling theorem is satisfied has been described by exemplifying the specific numerical values.
The set values in the specific examples and the various suppositions are merely examples. The set values or the contents of the various suppositions are not limited to the above-described examples. Accordingly, the set values or the various suppositions may be changed appropriately depending on technical levels realized in the embodiment.

The measurement data acquisition unit 103 is realized by, for example, a CPU, a ROM, a RAM, and a communication device. The measurement data acquisition unit 103 acquires the concrete data (image data) of the enlarged-image group measured by the microscope 20 from the microscope 20 (more specifically, the detector such as the PMT installed in the microscope 20). The concrete data of the enlarged-image group acquired from the microscope 20 is generated, for example, by scanning the measurement sample at the scanning interval that satisfies the Nyquist sampling theorem, as described above.

When the measurement data acquisition unit 103 acquires the concrete data of the enlarged-image group from the microscope 20, the measurement data acquisition unit 103 outputs the acquired image data to the measurement data correction unit 105 to be described below. The measurement data acquisition unit 103 may associate the acquired image with time information regarding an acquisition date or the like of the image data and may store the time information as history information in the storage unit 113.

The measurement data correction unit 105 is realized by, for example, a CPU, a graphics processing unit (GPU), a ROM, and a RAM. The measurement data correction unit 105 corrects at least one of position coordinates used to specify the position of the enlarged-image group and the acquisition time of the enlarged-image group in accordance with the scanning method of the microscope with regard to the image data of the enlarged-image data output from the measurement data acquisition unit 103.

More specifically, when the measurement data correction unit 105 corrects the position coordinates in the X, Y, and Z directions, the measurement data correction unit 105 corrects the enlarged-image group in accordance with the scanning method of the microscope so that the lattice point interval of the coordinate axes is constant. When the measurement data correction unit 105 corrects the acquisition time of the enlarged-image group, the measurement data correction unit 105 corrects the time corresponding to the enlarged-image group in accordance with the scanning method of the microscope so that the acquisition times of the pixels constituting the enlarged-image group are the same.

When the measurement data correction unit 105 performs such a correction process, the enlarged-image group turns to a three-dimensional image stack in which image acquisition times are identical to each other and the pixels constituting each image are mapped on an orthogonal coordinate system having thee coordinate axes X, Y, and Z. Further, the three-dimensional image stack is identical to a "four-dimensionally synchronous image stack" acquired at a constant time interval by Nₓ×N_{y}×N_{z} virtual massively parallel photomultiplier tubes.

The measurement data correction unit 105 performs the same correction process as the above-described process on the measurement data, and then stores the corrected measurement data (image data of the corrected enlarged-image group) in the storage unit to be described below or a storage unit installed in various devices located outside the information processing apparatus 10 or the storage unit 113 to be described below. As will be described in detail below, a process of correcting the acquisition time of the image or a process of correcting the position coordinates is a process that may be performed once on the measurement data acquired by the measurement data acquisition unit 103. Accordingly, whenever the measurement data correction unit 105 stores the corrected measurement data in the storage unit described above and the stereoscopic image data generation unit 109 to be described below generates stereoscopic image data, the process of correcting the measurement data may not be performed. Accordingly, it is possible to reduce the calculation load or make the process effective.

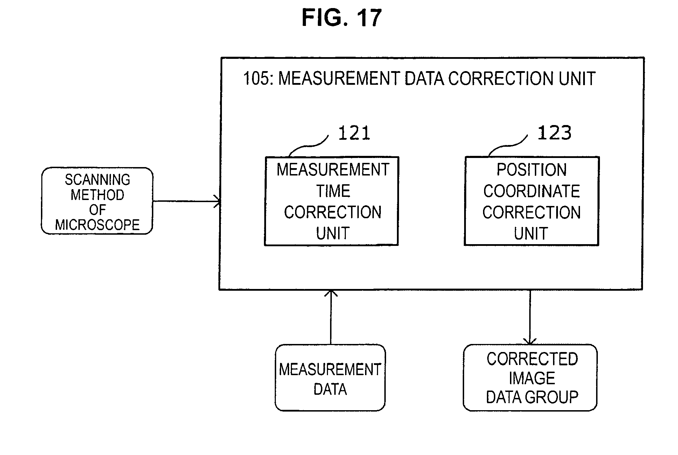

As shown in FIG. 17, the measurement data correction unit 105 includes a measurement time correction unit 121 and a position coordinate correction unit 123.

The measurement time correction unit 121 is realized by, for example, a CPU, a GPU, a ROM, and a RAM. The measurement time correction unit 121 corrects the time corresponding to the enlarged-image group in accordance with the scanning method of the microscope so that the acquisition times of the pixels constituting the enlarged-image group are the same as each other.

When the Z direction scanning method is either the intermittent movement method described with reference to FIG. 12 or the continuous movement method described with reference to FIG. 13, the acquisition time of the luminance is different despite the fact that the pixels in which the XY coordinates are the same and only the Z coordinate is different are included in the same three-dimensional image stack. For example, in the intermittent movement method described with reference to FIG. 12, the acquisition times of the pixels having the adjacent Z coordinates are different from each other by T_{eff}+T_{back}. Therefore, the acquisition time of the first line is different by (T_{eff}+T_{back})×N_{y} from the acquisition time of the N_{y}^{th} line.

The measurement time correction unit 121 performs a process of coordinating the acquisition times of information regarding the luminance of the pixels. A case in which the acquisition times of all the pixels included in the same three-dimensional image stack are corrected to be the same as the acquisition time of the finally acquired pixel will be considered as a specific example.

First, it is assumed that Nₓ, N_{y}, and N_{z} are the number of pixels in the X, Y, and Z directions, respectively. The number of pixels Nₓ corresponds to the number of times the sampling is performed in the X direction, the number of pixels N_{y} corresponds to the number of times the sampling is performed in the Y direction, and the number of pixels N_{z} corresponds to the number acquired in the Z direction. Here, to specify the position of a pixel in each direction, the following parameters are set.

Nᵢ: pixel coordinate in the X direction (i = 1 to Nₓ)
Nⱼ: pixel coordinate in the Y direction (j = 1 to N_{y})
Nₖ: pixel coordinate in the Z direction (k = 1 to N_{z})

Next, an intensity acquisition number n is assumed to be given to an acquisition order for all of the pixels. At this time, it is assumed that t(n) is an n^{th} sampling time and I(n) is the intensity (luminance value) of an n^{th} acquired pixel. Further, it is assumed that N_{2D} is the number of pixels of an X-Y image and N_{3D} is the number of pixels an X-Y-Z image.

n: intensity acquisition number
t(n): n^{th} sampling time
I(n): intensity of n^{th} acquired pixel
N_{2D}: the number of pixels of X-Y image (Nₓ×N_{y})
N_{3D}: the number of pixels of X-Y-Z image (N_{2D}×N_{z})

Here, it is supposed that the sampling position at X-Y-Z coordinates is constant. That is, Equation 151 to Equation 153 below are established at the sampling position at the coordinates.

${X}_{i} = x ⁢ \left(n+{N}_{2 ⁢ D}\right) = x \left(n\right)$ ${X}_{j} = y ⁢ \left(n+{N}_{2 ⁢ D}\right) = y \left(n\right)$ ${Z}_{k} = z ⁢ \left(n+{N}_{3 ⁢ D}\right) = z \left(n\right)$

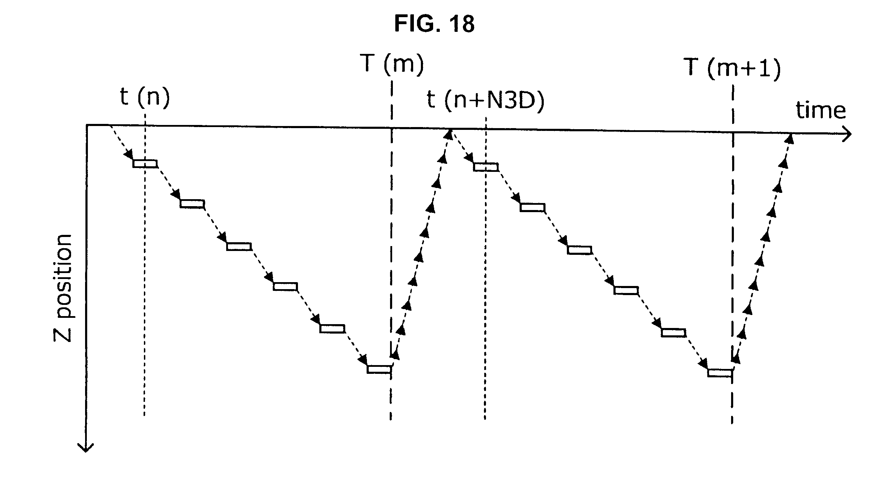

Here, as shown in FIG. 18, it is assumed that T(m) is an acquisition time of an m^{th} two dimensional image, and two times t(n) and t(n+N_{3D}) near T(m) at which the intensity of coordinates (Xᵢ, Yⱼ, Zₖ) is acquired satisfy a relation of t(n) < T(m) < t(n+N_{3D}). At this time, the measurement time correction unit 121 can simply calculate I(T(m)) by performing calculation through linear interpolation using I(n) and I(n+N_{3D}) and correct the measurement time based on Equation 154 below.

$I \left({X}_{i},{Y}_{j},{Z}_{k},T\left(m\right)\right) = I \left(n\right) + \left(I⁢\left(n+{N}_{3 ⁢ D}\right)-I\left(n\right)\right) \times \left(T\left(m\right)-t\left(n\right)\right) / \left(t⁢\left(n+{N}_{3 ⁢ D}\right)-t\left(n\right)\right)$

A method of selecting an appropriate sampling point by performing an up-converting process until a necessary time resolution to perform interpolation based on the Nyquist sampling theorem, and then performing interpolation through an LPF may, also be used, although this method is not the simple method described above.

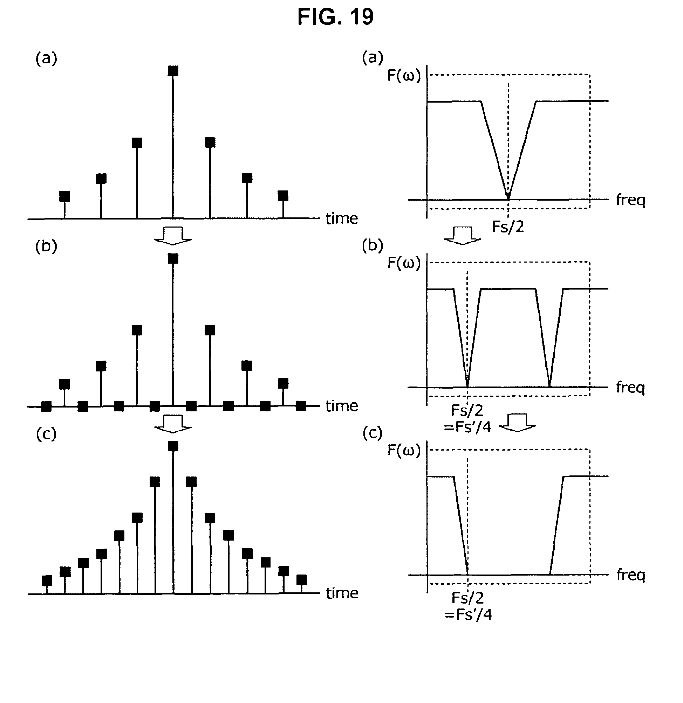

FIG. 19 is a diagram illustrating the above-described order specifically. Graphs on the left side of FIG. 19 show waveforms on the time axis. Drawings on the right side of FIG. 19 show spectra on the frequency axis corresponding to the waveforms on the time axis shown on the left side of FIG. 19, respectively.

In FIG. 19, the result obtained by inserting a sampling point with the amplitude of 0 between sampling points of a discrete signal (a) sampled at a sampling frequency Fs is shown in (b). This sampling point interpolation process is referred to as an up-converting process.

At this time, since a frequency component of Fs/2 or more in an original analog signal is suppressed so that the Nyquist sampling theorem is satisfied, the value at the frequency Fs/2 in the frequency spectrum of (a) is zero.

In the frequency spectrum of (b) showing the up-converted state, the scale of the frequency on the horizontal axis is spread to twice that of the frequency spectrum of (a). Therefore, it can be understood that the same spectrum as (a) is repeated twice.

Here, as shown in the waveform on the time axis of (c), the intermediate amplitude of the adjacent sampling point is given at the sampling point with the amplitude of 0 through the LPF that cuts the frequency component of Fs/2 or more. The interpolation is completed by performing the series of processes.

In the example shown in FIG. 19, the case in which the double up-converting process is performed has been described. However, the measurement time correction unit 121 may select a rational number m/n close to (T(m)-t(n))/(t(n+N_{3D})-t(n)), perform an n-multiple up-converting process, perform the interpolation, select an m^{th} sampling point, and then output the selected m^{th} sampling point as I(Xᵢ, Yj, Zₖ, T(m)).

The measurement time correction unit 121 can correct the measurement time of the measured image data by performing the same processes as those described above. The case in which the correction process is performed at the acquisition time of the finally acquired pixel has been described. However, the correction process may be performed at any acquisition time. Accordingly, the measurement time correction unit 121 may perform the correction process by focusing on one given time. When N_{z} two-dimensional images are present in the three-dimensional image stack, the measurement time correction unit 121 may perform the correction process so that the N_{z} two-dimensional images all have pixel values at the same acquisition time.

Referring back to FIG. 17, the position coordinate correction unit 123 will be described.
The position coordinate correction unit 123 is realized by, for example, a CPU, a GPU, a ROM, and a RAM. The position coordinate correction unit 123 corrects the enlarged-image group in accordance with a scanning method of the microscope so that the lattice point interval of the position coordinates in the X, Y, and Z directions is constant.

In the following description, mod (i, j) indicates a remainder when an integer i is divided by an integer j. Further, floor (f) indicates that numbers after the decimal point of a rational number f are truncated. When a relation between an image acquisition number n and the suffixes i, j, and k at coordinates of Xᵢ, Yⱼ, and Zₖ is expressed using these indications, the relation can be expressed as in Equation 161 to Equation 163.

$i = mod \left(n⁢{N}_{x}\right)$ $j = floor \left(mod\left(n\left({N}_{x}\times {N}_{y}\right)\right)/{N}_{x}\right)$ $k = floor \left(n/\left({N}_{x}\times {N}_{y}\times {N}_{z}\right)\right)$

Here, when it is assumed that Δx is a difference of an X coordinate corresponding to one pixel, an X coordinate Xᵢ is determined only by i, and thus can be expressed as in Equation 164 below.

${X}_{i} = Δx \times i$

In the basic raster scanning method described with reference to FIG. 9, the Y-direction galvanomirror is not moved in the Y direction while a moving image is acquired through the excitation light in the X direction. Therefore, a Y coordinate Yⱼ is determined only by j. In this case, when it is assumed that Δy is a difference between Y coordinates corresponding to one line, a Y coordinate Yⱼ can be expressed as in Equation 165 below.

${Y}_{j} = Δy \times j$

When the scanning method of moving the focal position intermittently in the Z direction, as in FIG. 12, is used in the microscope, the position in the Z direction is not changed while a moving image is acquired through the excitation light in the X and Y directions. Therefore, a Z coordinate Zₖ is determined only by k. When it is assumed that Δz is a difference between Z coordinates corresponding to one frame, a Z coordinate Zₖ can be expressed as in Equation 166 below.

${Z}_{k} = Δz \times k$

Thus, when the microscope is controlled in accordance with a scanning method combining the basic raster scanning method described with reference to FIG. 9 and the intermittent movement method of the Z direction described with reference to FIG. 12, the coordinates Xᵢ, Yⱼ, and Zₖ are determined only by i, j, and k, respectively. Accordingly, all of the pixels acquired by the microscope 20 performing the measurement in accordance with such a scanning method are present in the XYZ orthogonal coordinate space.

However, when the microscope 20 is controlled in accordance with the raster scanning method described with reference to FIG. 10, the zigzag scanning method described with reference to FIG. 11, or the continuous movement method of the Z direction described with reference to FIG. 13, the pixels constituting the image are not present in the orthogonal coordinate space, and thus the subject image display process may receive this influence.

Accordingly, the position coordinate correction unit 123 according to this embodiment corrects the position coordinates so that the acquired pixels are present in the orthogonal coordinate space, even when the microscope is controlled in accordance with the method of scanning a sample while continuously changing at least two of the vertical, horizontal, and depth directions of the sample, as described above.

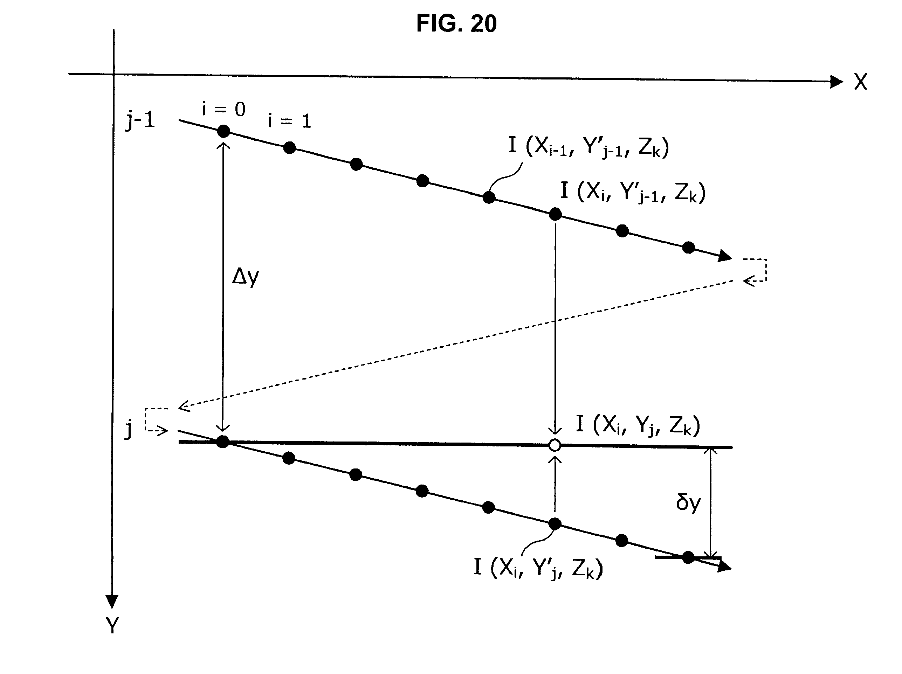

The description will be made with reference to FIG. 20. It is assumed that Xᵢ, Yⱼ, and Zₖ are coordinates of an orthogonal coordinate system and X'ᵢ, Y'ⱼ, and Z'ₖ are coordinates of a non-orthogonal coordinate system.

In the scanning method combining the raster scanning method described with reference to FIG. 10 and the intermittent movement method of the Z direction described with reference to FIG. 12, the X and Z coordinates are determined only by i and k, respectively, and thus can be indicated by Xᵢ and Zₖ. However, the Y coordinate depends on not only j but also i. Therefore, when it is assumed that Δy is the difference in the Y coordinates corresponding to one line, the Y coordinate Y'ⱼ can be expressed as in Equation 171 below.

${Yʹ}_{j} = Δy \times j + δ \times \left(i/{N}_{x}\right)$

In Equation 171, δ is a difference between Y'ⱼ at j = 0 and Y'ⱼ at j = N_{y}-1. At this time, the X and Y axes are not orthogonal to each other. Therefore, when it is assumed that Yⱼ is the coordinate on the Y axis that is orthogonal to the X axis, a relation of Y'ⱼ₋₁ < Yⱼ < Y'ⱼ is establised, as in FIG. 20. Accordingly, a relevant pixel can be made to be present in the orthogonal coordinate system by perfoming calculation as in Equation 172 below and performing an interpolation process.

$I \left({X}_{i},{Y}_{j},{Z}_{k},T\left(m\right)\right) = I ⁢ \left({X}_{i},{Yʹ}_{j - 1},{Z}_{k},T\left(m\right)\right) + ( I \left({X}_{i},{Yʹ}_{j},{Z}_{k},T\left(m\right)\right) - I ⁢ \left({X}_{i},{Yʹ}_{j - 1},{Z}_{k},T\left(m\right)\right) \times \left({Y}_{j}-{Yʹ}_{j - 1}\right) / \left({Yʹ}_{j}-{Yʹ}_{j - 1}\right)$

In Equation 172, I(Xᵢ, Y'ⱼ, Zₖ, T(m)) is the intensity of a pixel corrected on the time axis by the measurement time correction unit 121.

Any coordinate Yⱼ on the Y axis that is orthogonal to the X axis can be determined. However, for example, it is convenient to use, as Yⱼ, the same coordinate as that when the image is acquired in accordance with the scanning method described with reference to FIG. 9. For example, when the Y coordinate Y₀ = Y'o = 0 at the upper left end at which X₀=0 at i = j = 0 is used as a reference, the Y coordinate can be expressed, as in Equation 165 above, using the difference Δy in the Y coordinates corresponding to one line.

Here, when Equation 165 and Equation 171 above are used, it can be understood that a relation expressed by Equation 173 below is established. Accordingly, when Equation 172 above is reorganized using Equation 173 below, Equation 174 below can be obtained.

$\left({Y}_{j}-{Yʹ}_{j - 1}\right) / \left({Yʹ}_{j}-{Yʹ}_{j - 1}\right) = \left(Δy-δy\times \left(i/{N}_{x}\right)\right) / Δy$ $I \left({X}_{i},{Y}_{j},{Z}_{k},T\left(m\right)\right) = I ⁢ \left({X}_{i},{Yʹ}_{j - 1},{Z}_{k},T\left(m\right)\right) + \left(I\left({X}_{i},{Yʹ}_{j},{Z}_{k},T\left(m\right)\right)-I⁢\left({X}_{i},{Yʹ}_{j - 1},{Z}_{k},T\left(m\right)\right)\right) \times = \left(Δy-δy\times \left(i/{N}_{x}\right)\right) / Δy$

The calculation equation expressed in Equation 174 above is a calculation equation that uses linear interpolation, but is not the above-described method. Since the interpolation is performed according to the Nyquist sampling theorem, an appropriate sampling point can also be selected by performing the up-converting process up to a necessary resolution, and then performing interpolation through the LPF.

When the sampling interval Δy in the Y direction is sufficiently small so that the Nyquist sampling theorem is satisfied, the result obtained by correcting the coordinates through the interpolation is identical to the result obtained using the basic raster scanning method described with reference to FIG. 9.

Even when the scanning method combining the zigzag scanning method described with reference to FIG. 11 and the intermittent movement method of the Z direction described with reference to FIG. 12 is used, the Y coordinate can be corrected by simply using the linear interpolation, and more precisely, performing the interpolation, and the value of the pixel on the orthogonal coordinates can be calculated, as in the above-described case.

Even in this case, when the sampling interval Δy in the Y direction is sufficiently small so that the Nyquist sampling theorem is satisfied, the result obtained by correcting the coordinates through the interpolation is identical to the result obtained using the basic raster scanning method described with reference to FIG. 9.

On the other hand, when the continuous movement method of the Z direction described with reference to FIG. 13 is used, the Z coordinate of each pixel is different, as described above. Accordingly, when the continuous movement method of the Z direction is used, it is necessary to calculate an image on the X-Y plane cut at any Z coordinate.

When the movement speed in the Z direction is constant, a relation expressed by Equation 181 below is established between the Z coordinates of two pixels I (Xᵢ, Yⱼ, Z'ₖ₋₁) and I (Xᵢ, Yⱼ, Z'ₖ) having the same X and Y coordinates and different Y coordinates by the process on the XY coordinate plane described above.

${Zʹ}_{k} - {Zʹ}_{k - 1} = Δz$

In this equation, since Z'ₖ is a value associated with all of i, j, and k, Equation 182 below can be expressed using the image acquisition number n or the indexes i, j, and k.

$\begin{matrix}{Zʹ}_{k} & = Δz \times floor \left(n/\left({N}_{x}\times {N}_{y}\times {N}_{z}\right)\right) + δz \times mod \left(n,{N}_{x}\times {N}_{y}\right) / \left({N}_{x}\times {N}_{y}\right) \\ & = Δz \times k + δz \times \left(i+j\times {N}_{x}\right) / \left({N}_{x}\times {N}_{y}\right)\end{matrix}$

In this case, the calculation equation using the linear interpolation can be expressed as in Equation 183 below, similarly with Equation 172 above.

$I \left({X}_{i},{Y}_{j},{Z}_{k},T\left(m\right)\right) = I ⁢ \left({X}_{i},{Y}_{j - 1},{Zʹ}_{k},T\left(m\right)\right) + \left(I⁢\left({X}_{i},{Y}_{j},{Zʹ}_{k + 1},T\left(m\right)\right)-I\left({X}_{i},{Y}_{j},{Zʹ}_{k},T\left(m\right)\right)\right) \times \left({Z}_{k}-{Zʹ}_{k - 1}\right) / \left({Zʹ}_{k}-{Zʹ}_{k - 1}\right)$

A coordinate correction calculation equation based on the linear interpolation can be calculated by substituting Equation 182 above into Equation 183 above. Even in this case, as in the case of the Y coordinate, the process of performing the up-converting process is performed and the interpolation is then performed in order to perform the interpolation more precisely, as described with reference to FIG. 19.

Even in this case, when the sampling interval Δz in the Z direction is sufficiently small so that the Nyquist sampling theorem is satisfied, the result obtained by correcting the coordinates through the interpolation is identical to the result obtained using the intermittent movement method of the Z direction described with reference to FIG. 12.

Referring back to FIG. 16, the display region setting unit 107 will be described.
The display region setting unit 107 is realized by, for example, a CPU, a ROM, a RAM, an input device, and a communication device. The display region setting unit 107 sets a display region of the measurement data displayed on a display screen of a display apparatus such as the 3D display apparatus 30 in response to an operation (a user's operation) performed on the input device such as a keyboard, a mouse, or a touch panel by a user.

The user moves, enlarges, or reduces the viewpoint of the measurement data of the measurement sample displayed on the display screen, rotates the viewpoint of the measurement data on the two-dimensional plane, rotates the viewpoint of the measurement data stereoscopically, or changes the depth position of the displayed measurement sample.

When such a user's operation is input to the input device, the display region setting unit 107 specifies information regarding the input user's operation and determines a region of the three-dimensional image stack to be displayed on the display screen in response to the corresponding user's operation. When the display region setting unit 107 specifies the region of the three-dimensional image stack to be displayed on the display screen, the display region setting unit 107 outputs information regarding the specified display region to the stereoscopic image data generation unit 109. Thus, the stereoscopic image data generation unit 109 to be described below generates stereoscopic image data desired by the user and outputs the generated stereoscopic image data to the stereoscopic image data output unit 111 to be described below.

The stereoscopic image data generation unit 109, which is an example of a stereoscopic image generation unit, is realized by, for example, a CPU, a GPU, a ROM, and a RAM. The stereoscopic image data generation unit 109 generates stereoscopic images (right-eye and left-eye images as binocular stereoscopic images) of the enlarged-image group by giving parallax to the corrected image data group generated by the measurement data correction unit 105. The corrected image data group generated by the measurement data correction unit 105 is stored in, for example, the storage unit 113, as described above. Thus, the stereoscopic image data generation unit 109 acquires the corrected image data group from the storage unit 113 or the like and generates the stereoscopic images of the enlarged-image group. The stereoscopic image data generation unit 109 can generate the stereoscopic images as still images using the corrected image data group, and can also generate the stereoscopic images as moving images using information regarding the time axis of the corrected image data group.

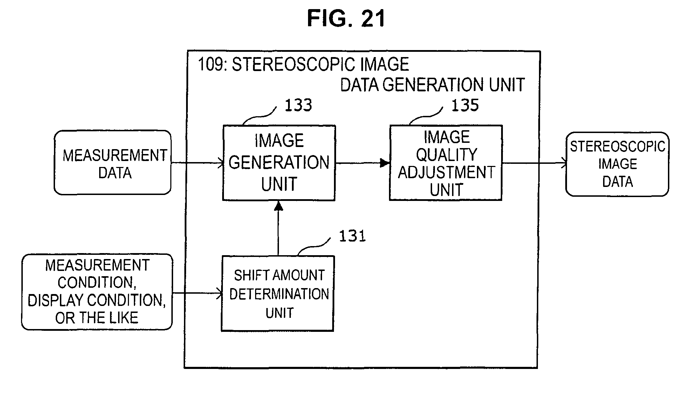

As shown in FIG. 21, the stereoscopic image data generation unit 109 according to this embodiment includes a shift amount determination unit 131, an image generation unit 133, and an image quality adjustment unit 135.

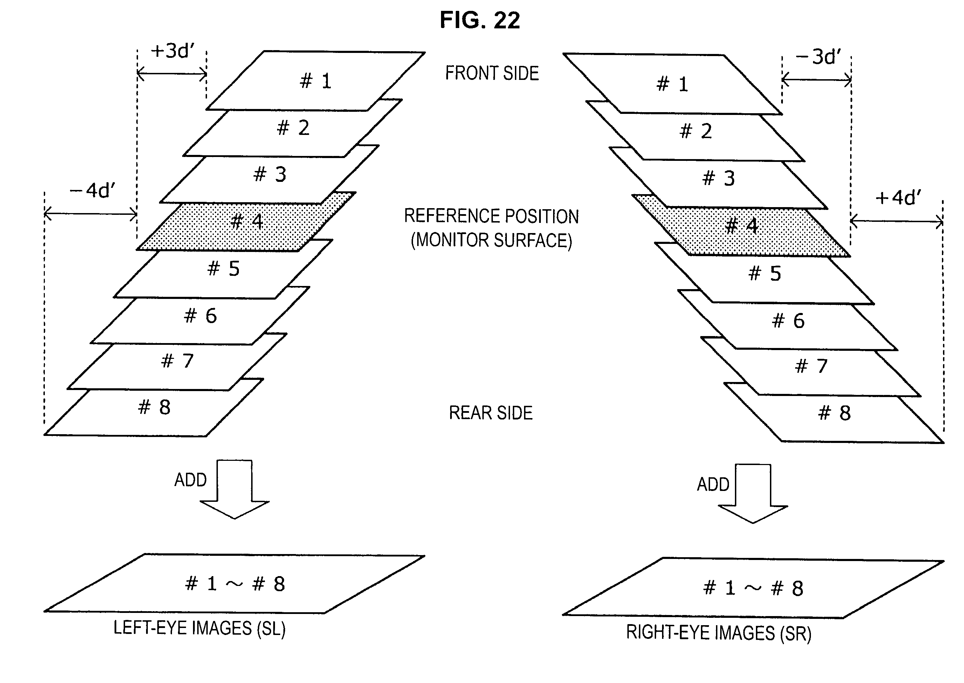

The shift amount determination unit 131 determines a shift amount d' used to generate the stereoscopic image data based on the generation condition of the enlarged-image group, the display condition of the stereoscopic image data, or the like in accordance with the method exemplified in FIG. 22. Hereinafter, a method of determining the shift amount d' in the shift amount determination unit 131 will be described in detail.

When it is assumed that dp_{S} [m] is a dot pitch of the enlarged-image group corrected by the measurement data correction unit 105, depth enlargement Zₛ [pixels] on an image and actual depth enlargement Z [m] have a relation of Zₛ [pixels] = Z [m]/dp_{S}. On the other hand, a depth L_{d} [m] recreated at the stereoscopic display time is expressed by a relation equation of L_{d} = L_{S}·dₑ/(dₑ+d). In this relation equation, Ls is a viewing distance, dₑ is the distance between eyes, and d is parallax (where the front side is defined to be positive). Accordingly, to create a stereoscopic image in accordance with an angle of view when a captured image is displayed, the shift amount d' may be set to be the same as Zₛ.

Here, when it is assumed that dₘₐₓ is parallax of a target image at the foremost and dₘᵢₙ is parallax of the target image at the rearmost, Equation 201 below is established.

$\begin{matrix}{Z}_{S} ⋅ d ⁢ {p}_{d} & = {L}_{d ⁢ min} - {L}_{d ⁢ max} \\ & = \frac{{L}_{S} ⋅ {d}_{e}}{{d}_{e} + {d}_{min}} - \frac{{L}_{S} ⋅ {d}_{e}}{{d}_{e} + {d}_{max}} \\ & \approx \frac{{L}_{S} ⋅ \left({d}_{max}-{d}_{min}\right)}{{d}_{e} + \left({d}_{max}-{d}_{min}\right)} \\ & = \frac{{L}_{S} ⋅ Δ ⁢ d}{{d}_{e} + Δ ⁢ d}\end{matrix}$

In Equation 201, dp_{d} is a dot pitch of the 3D display apparatus 30 on which the stereoscopic image data is displayed. From Equation 201 above, Δd which is a difference between dₘₐₓ and dₘᵢₙ is expressed as in Equation 202 below. When Δd is indicated by a pixel value, Equation 203 below is obtained.

$\begin{matrix}Δ ⁢ d & = {d}_{max} - {d}_{min} \\ & = \frac{{Z}_{S} ⋅ d ⁢ {p}_{d} ⋅ {d}_{e}}{{L}_{S} - {Z}_{S} ⋅ d ⁢ {p}_{d}}\end{matrix}$ $\begin{matrix}Δ ⁢ d & = \frac{Δ ⁢ d}{d ⁢ {p}_{d}} \\ & = \frac{{Z}_{S} ⋅ {d}_{e}}{{L}_{S} - {Z}_{S} ⋅ d ⁢ {p}_{d}}\end{matrix}$

From Equation 203 above, the shift amount d' [pixels] can be expressed as in Equation 204 below. In Equation 204 below, N is the number of images in the enlarged-image group.

$dʹ = \frac{Δ ⁢ d}{2 ⋅ \left(N-1\right)}$

Equation 205 below is obtained by substituting Equation 203 above into Equation 204 above and introducing a scaling parameter s (normally, set to 1).

$s ⋅ dʹ = s ⋅ \frac{{Z}_{S} ⋅ {d}_{e}}{2 ⋅ \left(N-1\right) ⋅ \left({L}_{S}-{Z}_{S}⋅d⁢{p}_{d}\right)}$

The shift amount determination unit 131 according to this embodiment determines the shift amount d' based on Equation 204 and Equation 205 above and outputs the determined shift amount d' to the image generation unit 133 to be described below.

The shift amount determination unit 131 may set the values of parameters to be described below as the parameters among the parameters associated with Equation 204 or Equation 205 above.

When the 3D display apparatus has a 46 V size (1920 pixels by 1080 pixels), the dot pitch dp_{d} is 0.053 [m].
The viewing distance L_{S} is three times a display height H.
The distance dₑ between eyes is 6.5 cm.

The shift amount determination unit 131 may appropriately set a multiple of an integer as the shift amount d'. In this case, the shift amount determination unit 131 appropriately adjusts the scaling parameter s in Equation 205 above. Further, when Δd exceeds a comfortable parallax range, the shift amount determination unit 131 may reduce the shift amount d' so that Δd is present within the comfortable parallax range. Even in this case, the shift amount determination unit 131 appropriately adjusts the scaling parameter s. Although the detailed description is not made, the comfortable parallax range can be calculated from a viewing distance, a screen size, or the like that can be supposed. For example, in a case of a 46 V type TV, the depth of the comfortable range is 0.5 m (front) to 1.5 m (rear) when the viewing distance is 1.7 m. When the range is substituted with parallax, the depth is -56 pixels (front) to 55 pixels (rear).

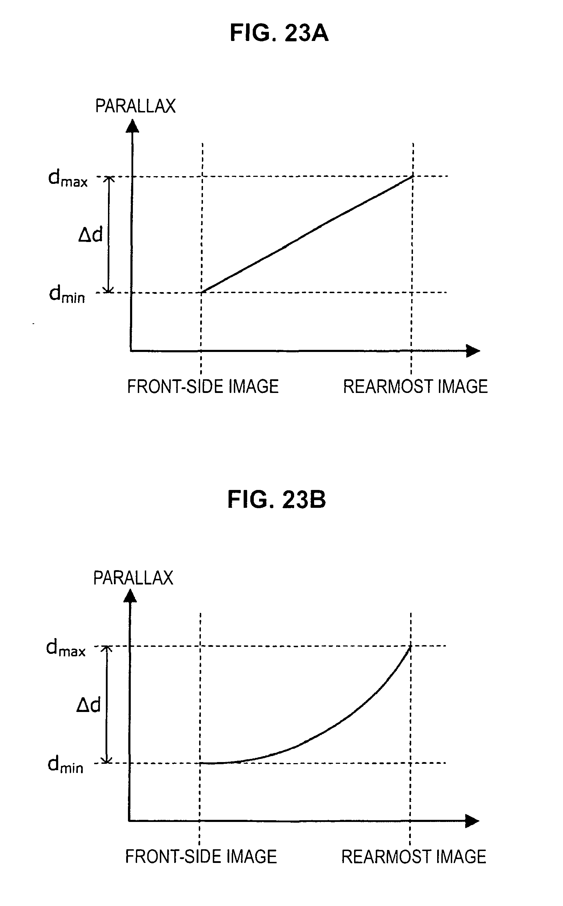

As described above, the shift amount determination unit 131 sets a linear relation between a depth location of an image and a shift amount, as shown in FIG. 23A. Thus, a process of sequentially shifting, only by the shift amount d', eight images #1 to #8 photographed while changing the locations at the same interval in the depth direction is performed. In this case, the parallax given to each image by the shift amount determination unit 131 is equal to a value obtained by equally dividing Δd.

Conversely, the shift amount determination unit 131 may set a nonlinear relation between a depth location of an image and a shift amount, as shown in FIG. 23B. In this case, the parallax given to each image by the shift amount determination unit 131 is equal to a value obtained by dividing Δd in a nonlinear manner. Originally, the relation between the parallax and the depth is nonlinear. Therefore, the depth can be recreated precisely by setting the relation between the depth position of an image and the shift amount in the nonlinear manner.

The image generation unit 133 is realized by, for example, a CPU, a GPU, a ROM, and a RAM. The image generation unit 133 generates a pair of binocular stereoscopic images (right-eye and left-eye images) by performing the process of giving parallax to the corrected enlarged-image group. At this time, the image generation unit 133 gives the parallax to the three-dimensional image stack by shifting a pair of image stacks in right and left opposite directions centering the images at a reference position, for example, as shown in FIG. 22. Thereafter, the image generation unit 133 generates a right-eye image SR and a left-eye image SL by performing a process of adding and averaging the pixels at the pixel positions on each image group.

FIG. 22 shows an example in which eight images #1 to #8 photographed by changing the positions at the same interval in the depth direction are used. The image #4 is the image at the reference position.

The image generation unit 133 generates a plurality of images constituting the left-eye image group by performing the process of shifting the eight images in the horizontal direction with respect to the depth position centering the image (image #4) at the reference position. That is, the image generation unit 133 sequentially shifts the images (images #3 to #1), which are located on the front side from the image at the reference position, in one direction (for example, to the right) of the horizontal direction with respect to the depth position and sequentially shifts the images (images #5 to #8), which are located on the rear side from the image at the reference position, in the other direction (for example, to the left) of the horizontal direction with respect to the depth position.

At this time, the image generation unit 133 sequentially shifts the images located on the front side from the image (image #4) at the reference position only by "+d'" in the horizontal direction. Accordingly, the image (image #1) located foremost from the image (image #4) at the reference position is shifted only by "+3d'" in the horizontal direction. In this case, the image generation unit 133 sequentially shifts the images located on the rear side from the image (image #4) at the reference position only by "-d'" in the horizontal direction. Accordingly, the image (image #8) located rearmost from the image (image #4) at the reference position is shifted only by "-4d'" in the horizontal direction. Here, "d'" indicates a shift amount that is determined based on the imaging conditions of the enlarged-image group, the display conditions of the binocular stereoscopic image, or the like by the shift amount determination unit 131.

Then, the image generation unit 133 generates the left-eye images SL (images #1 to #8) by performing the process of adding and averaging the pixels (pixel data) at the pixel positions on the plurality of shifted images (images #1 to #8) constituting the left-eye image group. In this case, in the shifting process, the number of pixels to be subjected to the adding and averaging process is any one of one to eight depending on the pixel position.

The image generation unit 133 generates a plurality of images constituting the right-eye image group by performing a process of shifting the eight images in the horizontal direction with respect to the depth position centering the image (image #4) at the reference position. That is, the image generation unit 133 sequentially shifts the images (images #3 to #1), which are located on the front side from the image at the reference position, in the other direction (for example, to the left) of the horizontal direction with respect to the depth position and sequentially shifts the images (images #5 to #8), which are located on the rear side from the image at the reference position, in the one direction (for example, to the right) of the horizontal direction with respect to the depth position. In this shifting process, the images are shifted in the symmetrically opposite directions to the directions in which the plurality of images constituting the left-eye image group described above are generated.

At this time, the image generation unit 133 sequentially shifts the images located on the front side from the image (image #4) at the reference position only by "-d'" in the horizontal direction. Accordingly, the image (image #1) located foremost from the image (image #4) at the reference position is shifted only by "-3d'" in the horizontal direction. In this case, the image generation unit 133 sequentially shifts the images located on the rear side from the image (image #4) at the reference position only by "+d"' in the horizontal direction. Accordingly, the image (image #8) located rearmost from the image (image #4) at the reference position is shifted only by "+4d'" in the horizontal direction.

Then, the image generation unit 133 generates the right-eye images SR (images #1 to #8) by performing the process of adding and averaging the pixels (pixel data) at the pixel positions on the plurality of shifted images (images #1 to #8) constituting the right-eye image group. In this case, in the shifting process, the number of pixels to be subjected to the adding and averaging process is any one of one to eight depending on the pixel position.

Through the above-described processes, the images located on the front side from the reference position (the fourth image from the front side) are set such that these images are viewed as extending from a monitor surface of the 3D display apparatus 30 and the images located on the rear side from the reference position are set such that these images are viewed as being recessed from the monitor surface in the example shown in FIG. 22.

Further, in a general image such as a landscape, when an object is present on the front side, a portion located on the rear side of the object is shaded, and thus is not viewed. Therefore, to display the general image stereoscopically, a process (hidden-surface removing process) of removing a shaded and hidden portion is performed in consideration of a depth position relation between objects. However, when an image acquired by a fluorescent microscope is viewed as an image in which a fluorescent body floats in a dark three-dimensional space, a shaded portion may remain to be viewed by a user. That is, when stereoscopic image data of an enlarged-image group generated by a fluorescent microscope is generated, the hidden-surface removing process may be omitted.

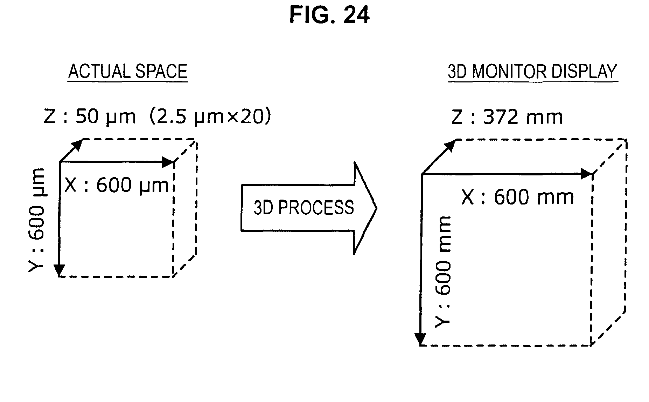

Through the above-described processes, the stereoscopic image data with the dimensions of 600 mm×600 mm×372 mm displayed on the 3D display apparatus 30 is generated based on twenty images acquired at the interval of the depth 2.5 µm in the range of 600 µm×600 µm, as in FIG. 24.

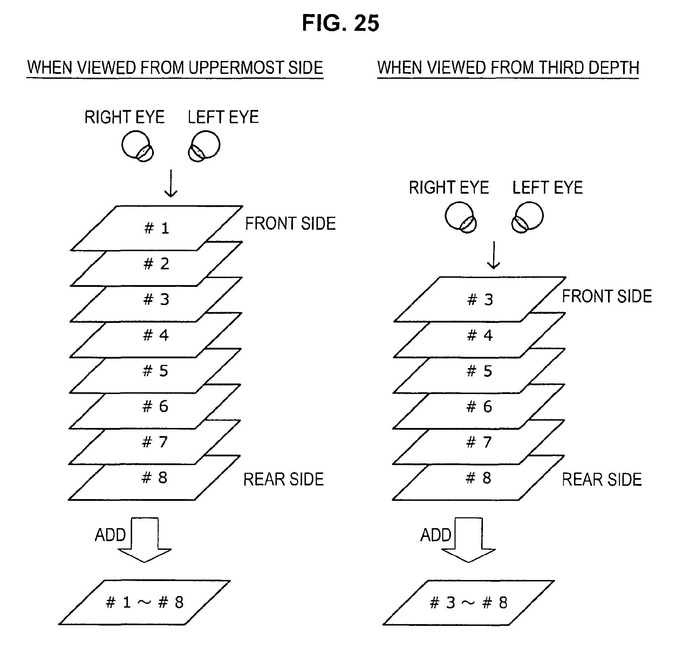

As shown in the drawing on the left side of FIG. 25, the stereoscopic image data generated through the above-described processes corresponds to image data or the like when the three-dimensional image stack is viewed from the uppermost side.
Here, a case in which a user's operation of moving a display region in parallel within the XY plane, rotating the display region within the XY plane, or rotating the display region within the XYZ space is notified of by the display region setting unit 107 without changing the depth position will be considered. In this case, the image generation unit 133 can generate appropriate stereoscopic image data in response to the user's operation by moving a rectangular parallelepiped formed by the three-dimensional image stack generated through these processes within the XY plane, rotating the rectangular parallelepiped within the XY plane, or rotating the rectangular parallelepiped in the XYZ space.

Further, a case in which a user's operation (for example, an operation of changing a depth position of the depth from the upper side to the third image) of changing a depth position is notified of by the display region setting unit 107 will be considered. In this case, the image generation unit 133 can generate stereoscopic image data using the third to eighth images by deleting the uppermost image and the second image from the upper side of the three-dimensional image stack, as shown in the right drawing on the right side of FIG. 25.

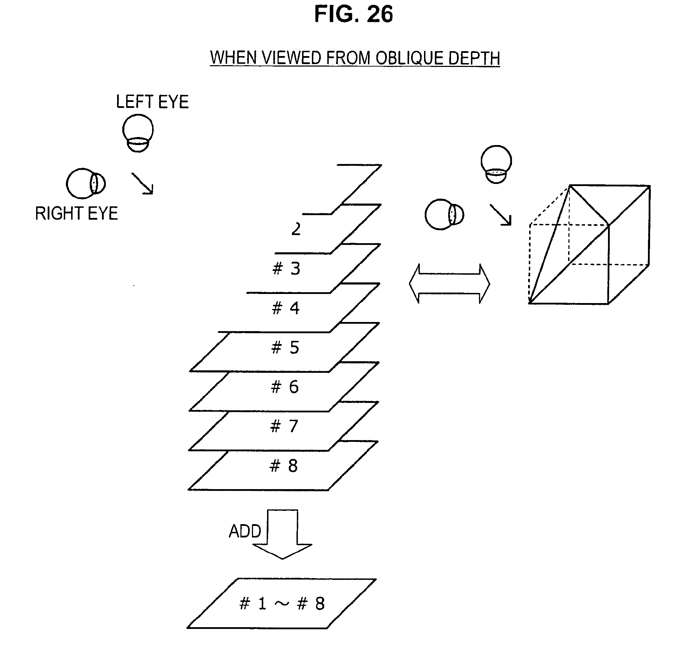

Furthermore, a case in which a user's operation of changing and viewing a deeper depth obliquely is notified of by the display region setting unit 107 will be considered. In this case, the image generation unit 133 newly generates stereoscopic image data by cutting part of a rectangular parallelepiped formed by the three-dimensional image stack so as to be suitable for the line of sight designated by the user's operation, as shown in FIG. 26.

Thus, when a user's operation of changing a display region is not performed, the image generation unit 133 generates stereoscopic image data when the three-dimensional image stack is viewed from the upper side. The image generation unit 133 can also generate the stereoscopic image data in response to a user's operation in real time while suppressing a calculation load, when a user's operation of changing a display region is performed.

The image generation unit 133 outputs the stereoscopic image data generated in the above-described processes to the image quality adjustment unit 135.

The image quality adjustment unit 135 is realized by, for example, a CPU, a GPU, a ROM, and a RAM. The image quality adjustment unit 135 performs image-quality adjustment such as contrast adjustment on the right-eye and left-eye images generated by the image generation unit 133. As a result, since the dynamic range of the stereoscopic image data formed by the right-eye and left-eye images can be enlarged by the image quality adjustment unit 135, a dark image is adjusted to be bright. Thus, the image quality adjustment unit 135 can improve the visibility of the stereoscopic images.

When the image-quality adjustment on the stereoscopic image data ends, the image quality adjustment unit 135 outputs the stereoscopic image data subjected to the image-quality adjustment to the image data output unit 111. The image quality adjustment unit 135 may store the stereoscopic image data subjected to the image-quality adjustment in the storage unit 113 to be described below or various devices outside the information processing apparatus 10.

Referring back to FIG. 16, the stereoscopic image data output unit 111 according to this embodiment will be described.
The stereoscopic image data output unit 111, which is an example of a stereoscopic image output unit, is realized by a CPU, a ROM, a RAM, an output device, and a communication device. The stereoscopic image data output unit 111 outputs the stereoscopic image data generated by the stereoscopic image data generation unit 109 to the 3D display apparatus 30.

The stereoscopic image data output unit 111 can output only the stereoscopic image data at any time and causes the 3D display apparatus 30 to display the stereoscopic image data as a still image. Further, the stereoscopic image data output unit 111 can cause the 3D display apparatus 30 to display the stereoscopic image data as a moving image by outputting the stereoscopic image data sequentially in chronological order using information regarding a time axis which can be associated as metadata with the stereoscopic image data.

When the stereoscopic image data output unit 111 outputs the stereoscopic image data to the 3D display apparatus 30, the stereoscopic image data output unit 111 can output the right-eye and left-eye images so as to be suitable for a frame sequential display scheme. Thus, the 3D display apparatus 30 can display the right-eye and left-eye images accurately for the right and left eyes of a user, while maintaining the full HD image quality.

Further, when the stereoscopic image data output unit 111 outputs the stereoscopic image data to the 3D display apparatus 30, the stereoscopic image data output unit 111 can output the right-eye and left-eye images so as to be suitable for a horizontal division scheme or a vertical division scheme.

When the stereoscopic image data output unit 111 outputs the stereoscopic image data to the 3D display apparatus 30, the user of the 3D display apparatus 30 can view a three-dimensional still image or a three-dimensional moving image acquired by the fluorescent microscope in a binocular stereoscopic manner.

Thus, the user can comprehend a change in the three-dimensional distances of objects (for example, cells) present within a displayed field of view. Therefore, when the overlapping objects (such as cells) are displayed, the user can easily distinguish between the objects located close to and distant from each other. As a result, the user can intuitively distinguish between the temporally changed forms of the cells which are approaching and receding. Therefore, it is possible to obtain the knowledge regarding interaction or information exchange between the cells before detailed three-dimensional analysis. Thus, it is possible to contribute to rapid advances in medical research.

The storage unit 113 is realized by, for example, a RAM or a storage device of the information processing apparatus 10 according to this embodiment. For example, the storage unit 113 stores the measurement data corrected and generated by the measurement data correction unit 105. The storage unit 113 may store the stereoscopic image data generated by the stereoscopic image data generation unit 109, as necessary. The storage unit 113 may store various parameters, control programs, or the like used for the microscope control unit 101 to control the microscope 20. The storage unit 113 appropriately stores various parameters, progress of processes under way, various databases, or the like necessary to be stored when the information processing apparatus 10 performs any process. The storage unit 113 is configured such that each processing unit of the information processing apparatus 10 according to this embodiment can read and write information freely.

The case in which the information processing apparatus 10 according to this embodiment performs all of the process of controlling the data acquisition interval, the process of correcting the position coordinates of the measurement data, and the process of correcting the time axis of the measurement data has been described. However, even when one of these processes is not performed, the relevant advantages can be obtained.

For example, since the performance of a device controlling the microscope 20 is lacking, it is sometimes difficult to satisfy the Nyquist sampling theorem for both the XYZ space and the time t. In this case, since a calculation error increases in the process of correcting the position and time, there is a high probability that bleeding or the like may occur in an image. However, the microscope system can be embodied. Further, even when a motion of an object desired to be observed is not sufficient and the time correction process is not performed, an error scarcely occurs in some cases.

When the performance of the device is improved, the sample can be expected to be photographed at the acquisition interval that satisfies the Nyquist sampling theorem without special control even in the case in which the base raster scanning method described with reference to FIG. 9 and the intermittent movement method of the Z direction described with reference to FIG. 12 are combined. Even in this case, the three-dimensional image stack may be simply obtained by not performing any one of the process of controlling the data acquisition interval, the process of correcting the position coordinates, and the process of correcting the time axis, and thus the stereoscopic image data may be generated.

The examples of the functions of the information processing apparatus 10 according to this embodiment have been described. Each of the above-described constituent elements may be configured by a general member or circuit or may be configured by hardware specialized for the function of each constituent element. Further, the function of each constituent element may be executed by a CPU or the like. Accordingly, the configuration of each constituent element may be modified appropriately in accordance with the technical level when the embodiment is realized.

A computer program configured to realize each function of the information processing apparatus according to the above-described embodiment may be produced and mounted on a personal computer or the like. Further, a computer-readable recording medium storing the computer program may be provided. Examples of the recording medium include a magnetic disk, an optical disc, a magneto-optical disc, and a flash memory. Further, the computer program may be transmitted via, for example, a network without using a recording medium.

### First Modified Example

The functions of the microscope control unit 101, the measurement data acquisition unit 103, the measurement data correction unit 105, the display region setting unit 107, the stereoscopic image data generation unit 109, the stereoscopic image data output unit 111, and the storage unit 113 may be mounted on any hardware, when each hardware can transmit and receive information via a network. Further, the process performed by a processing unit may be realized by single hardware or may be realized in a distributed manner by a plurality of hardware.

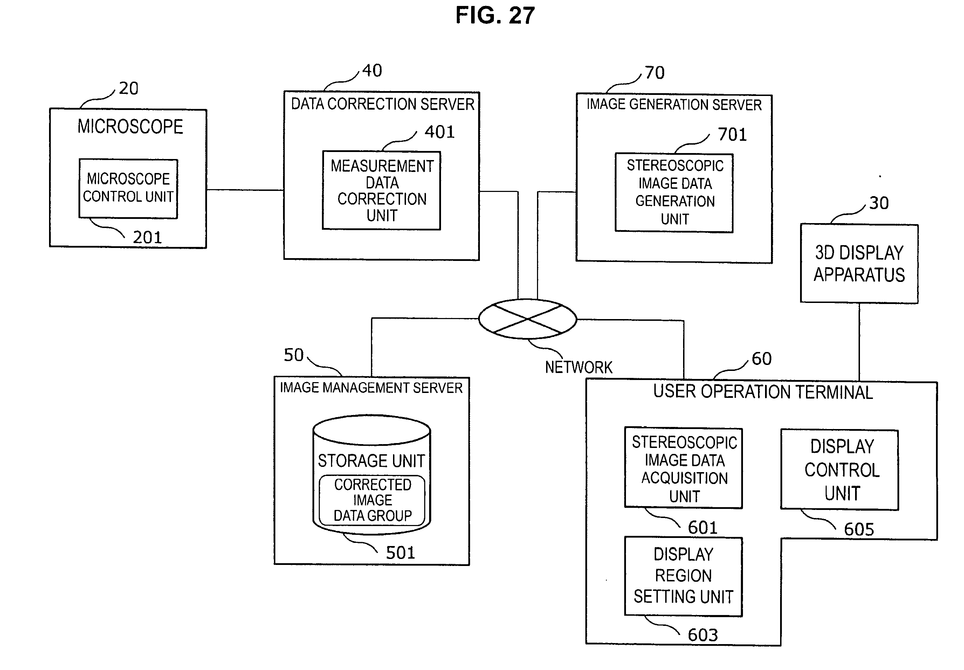

For example, FIG. 27 shows a microscope system when the functions of the information processing apparatus 10 according to this embodiment are distributed to and realized in a microscope 20, a data correction server 40, an image management server 50, a user operation terminal 60, and an image generation server 70.

In this microscope system, measurement data measured by the microscope 20 is output to the data correction server 40, and then is corrected by the data correction server 40. Then, the corrected measurement data is stored in a storage unit of the image management server 50 connected via a network such as the Internet. When the user operation terminal 60 gives a request to attempt to acquire an enlarged-image group of a given measurement sample to the image generation server 70, the image generation server 70 acquires the corresponding image data from the image management server 50, generates stereoscopic image data in response to a user's operation, and then supplies the generated stereoscopic image data to the user operation terminal 60. When the user operation terminal 60 displays the stereoscopic image data supplied from the image generation server 70 on the 3D display apparatus 30, the binocular stereoscopic image of the measurement sample is supplied to the user.

In the microscope system, the microscope 20 includes a microscope control unit 201. The microscope control unit 201 of the microscope 20 generates the enlarged-image group of the measurement sample in an acquisition interval that satisfies the sampling theorem by controlling the microscope 20. The microscope control unit 201 has the same configuration as the microscope control unit 101 of the information processing apparatus 10 according to the above-described embodiment. Therefore, since the same advantages can be obtained, the detailed description will not be repeated.

The data correction server 40 includes a measurement data correction unit 401, as shown in FIG. 27. The measurement data correction unit 401 of the data correction server 40 has the same configuration as the measurement data correction unit 105 of the information processing apparatus 10 according to the above-described embodiment except that the corrected image data group is stored in a storage unit 501 of the image management server 50. Therefore, the same advantages can be obtained. Thus, the detailed description will not be repeated below.

The image management server 50 includes the storage unit 501 that stores the image data group corrected by the data correction server 40, as shown in FIG. 27. When the image management server 50 receives a request to supply the image data group from the single image generation server 70 or the plurality of image generation servers 70 via the network such as the Internet, the image management server 50 outputs the requested image data group to the image generation server 70 that has transmitted the request.

The user operation terminal 60 includes a stereoscopic image data acquisition unit 601, a display region setting unit 603, and a display control unit 605 as main units, as shown in FIG. 27.

The stereoscopic image data acquisition unit 601 gives a request to supply the stereoscopic image data of a given measurement sample designated by a user to the image generation server 70 connected via the network, when the user performs an operation of displaying the enlarged-image group of the given measurement sample. When the stereoscopic image data is supplied from the image generation server 70, the stereoscopic image data acquisition unit 601 outputs the supplied stereoscopic image data to the display control unit 605 and displays the stereoscopic image data on the 3D display apparatus 30.

Since the display region setting unit 603 according to this modified example has the same configuration as the display region setting unit 107 of the information processing apparatus 10 according to the above-described embodiment and the same advantages are obtained, the detailed description will not be repeated.

The display control unit 605 performs display control on a display apparatus such as a 3D display of the user operation terminal 60 or a display screen of the 3D display apparatus 30 installed outside the user operation terminal 60. More specifically, the display control unit 605 performs the display control on the display screen based on the stereoscopic image data output from the stereoscopic image data acquisition unit 601. When the display control unit 605 performs the display control on the display screen of the stereoscopic image data, the user of the user operation terminal 60 can view the enlarged-image group of the measurement sample as a stereoscopic image.

The image generation server 70 includes a stereoscopic image data generation unit 701, as shown in FIG. 27. Since the stereoscopic image data generation unit 701 of the image generation server 70 has the same configuration as the stereoscopic image data generation unit 109 of the information processing apparatus 10 according to the above-described embodiment except that the stereoscopic image data generation unit 701 acquires the corrected image data group from the image management server 50 in response to a request from the user operation terminal 60 and outputs the generated stereoscopic image data to the user operation terminal 60, the same advantages can be obtained. Accordingly, the detailed description will not be repeated below.

In the configuration shown in FIG. 27, the processes can be efficiently performed since a general correction process performed only once on all of the original images can be distinguished from any kind of process of displaying an image.

### Information Processing Method

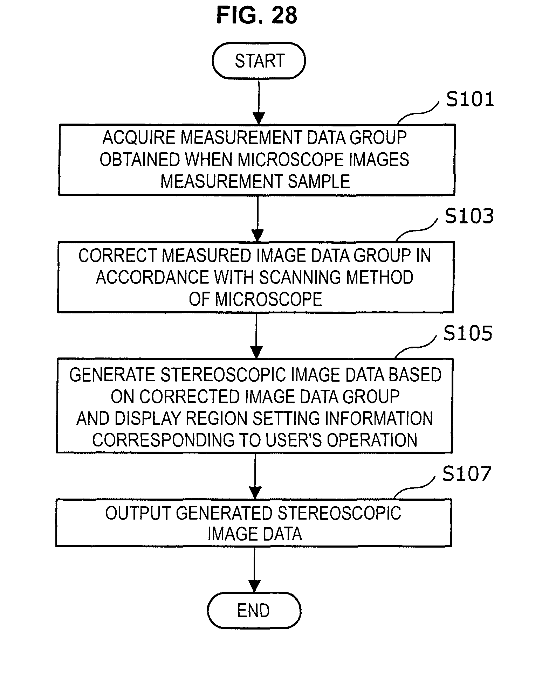

Next, a flow of an information processing method performed by the information processing apparatus according to the above-described embodiment will be described simply with reference to FIG. 28. FIG. 28 is a flowchart illustrating an example of the flow of the information processing method according to the embodiment.

In the information processing method according to an embodiment, the measurement data acquisition unit 103 first acquires, from the microscope 20, a measurement data group obtained by imaging a measurement sample by the microscope 20 and outputs the acquired measurement data group to the measurement data correction unit 105 (step S101).

The measurement data correction unit 105 corrects the image data group measured by the microscope 20 in accordance with an operation method of the microscope (step S103) to generate the corrected image data group. Then, the measurement data correction unit 105 outputs the corrected image data group to the stereoscopic image data generation unit 109.

The stereoscopic image data generation unit 109 generates the stereoscopic image data based on the image data group corrected by the measurement data correction unit 105 and the display region setting information corresponding to a user's operation (step S105). Then, the stereoscopic image data generation unit 109 outputs the generated stereoscopic image data to the stereoscopic image data output unit 111.

The stereoscopic image data output unit 111 outputs the stereoscopic image data output from the stereoscopic image data generation unit 109 to the 3D display apparatus 30 (step S107). The 3D display apparatus 30 displays the stereoscopic image data output from the information processing apparatus 10 on the display screen to supply the stereoscopic image of the measurement sample to the user.

### (Hardware Configuration)

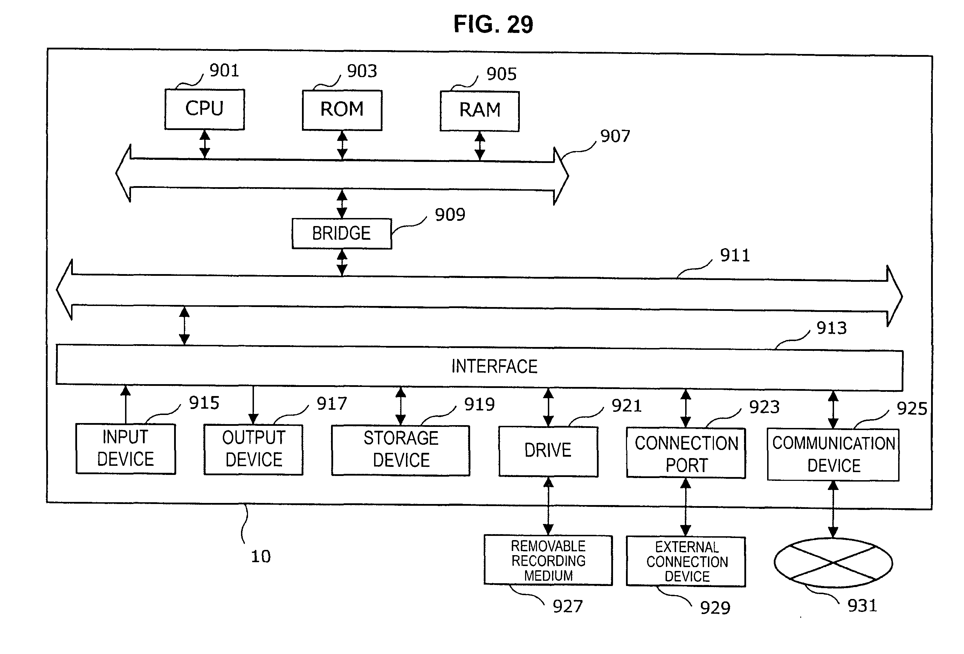

Next, the hardware configuration of the information processing apparatus 10 according to the embodiment of the present disclosure will be described in detail with reference to FIG. 29. FIG. 29 is a block diagram for illustrating the hardware configuration of the information processing apparatus 10 according to the embodiment of the present disclosure.

The information processing apparatus 10 mainly includes a CPU 901, a ROM 903, and a RAM 905. Furthermore, the information processing apparatus 10 also includes a host bus 907, a bridge 909, an external bus 911, an interface 913, an input device 915, an output device 917, a storage device 919, a drive 921, a connection port 923, and a communication device 925.

The CPU 901 serves as an arithmetic processing apparatus and a control device, and controls the overall operation or a part of the operation of the information processing apparatus 10 according to various programs recorded in the ROM 903, the RAM 905, the storage device 919, or a removable recording medium 927. The ROM 903 stores programs, operation parameters, and the like used by the CPU 901. The RAM 905 primarily stores programs that the CPU 901 uses and parameters and the like varying as appropriate during the execution of the programs. These are connected with each other via the host bus 907 configured from an internal bus such as a CPU bus or the like.

The host bus 907 is connected to the external bus 911 such as a PCI (Peripheral Component Interconnect/Interface) bus via the bridge 909.

The input device 915 is an operation means operated by a user, such as a mouse, a keyboard, a touch panel, buttons, a switch and a lever. Also, the input device 915 may be a remote control means (a so-called remote control) using, for example, infrared light or other radio waves, or may be an externally connected device 929 such as a mobile phone or a PDA conforming to the operation of the information processing apparatus 10. Furthermore, the input device 915 generates an input signal based on, for example, information which is input by a user with the above operation means, and is configured from an input control circuit for outputting the input signal to the CPU 901. The user of the information processing apparatus 10 can input various data to the information processing apparatus 10 and can instruct the information processing apparatus 10 to perform processing by operating this input apparatus 915.

The output device 917 is configured from a device capable of visually or audibly notifying acquired information to a user. Examples of such device include display devices such as a CRT display device, a liquid crystal display device, a plasma display device, an EL display device and lamps, audio output devices such as a speaker and a headphone, a printer, a mobile phone, a facsimile machine, and the like. For example, the output device 917 outputs a result obtained by various processings performed by the information processing apparatus 10. More specifically, the display device displays, in the form of texts or images, a result obtained by various processes performed by the information processing apparatus 10. On the other hand, the audio output device converts an audio signal such as reproduced audio data and sound data into an analog signal, and outputs the analog signal.

The storage device 919 is a device for storing data configured as an example of a storage unit of the information processing apparatus 10 and is used to store data. The storage device 919 is configured from, for example, a magnetic storage device such as a HDD (Hard Disk Drive), a semiconductor storage device, an optical storage device, or a magneto-optical storage device. This storage device 919 stores programs to be executed by the CPU 901, various data, and acoustic signal data or image signal data, or the like, obtained from externally.

The drive 921 is a reader/writer for recording medium, and is embedded in the information processing apparatus 10 or attached externally thereto. The drive 921 reads information recorded in the attached removable recording medium 927 such as a magnetic disk, an optical disk, a magneto-optical disk, or a semiconductor memory, and outputs the read information to the RAM 905. Furthermore, the drive 921 can write in the attached removable recording medium 927 such as a magnetic disk, an optical disk, a magneto-optical disk, or a semiconductor memory. The removable recording medium 927 is, for example, a DVD medium, an HD-DVD medium, or a Blu-ray medium. The removable recording medium 927 may be a CompactFlash (CF; registered trademark), a flash memory, an SD memory card (Secure Digital Memory Card), or the like. Alternatively, the removable recording medium 927 may be, for example, an IC card (Integrated Circuit Card) equipped with a non-contact IC chip or an electronic appliance.

The connection port 923 is a port for allowing devices to directly connect to the information processing apparatus 10. Examples of the connection port 923 include a USB (Universal Serial Bus) port, an IEEE1394 port, a SCSI (Small Computer System Interface) port, and the like. Other examples of the connection port 923 include an RS-232C port, an optical audio terminal, an HDMI (High-Definition Multimedia Interface) port, and the like. By the externally connected apparatus 929 connecting to this connection port 923, the information processing apparatus 10 directly obtains various data from the externally connected apparatus 929 and provides various data to the externally connected apparatus 929.

The communication device 925 is a communication interface configured from, for example, a communication device for connecting to a communication network 931. The communication device 925 is, for example, a wired or wireless LAN (Local Area Network), Bluetooth (registered trademark), a communication card for WUSB (Wireless USB), or the like. Alternatively, the communication device 925 may be a router for optical communication, a router for ADSL (Asymmetric Digital Subscriber Line), a modem for various communications, or the like. This communication device 925 can transmit and receive signals and the like in accordance with a predetermined protocol such as TCP/IP on the Internet and with other communication devices, for example. The communication network 931 connected to the communication device 925 is configured from a network and the like, which is connected via wire or wirelessly, and may be, for example, the Internet, a home LAN, infrared communication, radio wave communication, satellite communication, or the like.

Heretofore, an example of the hardware configuration capable of realizing the functions of the information processing apparatus 10 according to the embodiment of the present disclosure has been shown. Each of the structural elements described above may be configured using a general-purpose material, or may be configured from hardware dedicated to the function of each structural element. Accordingly, the hardware configuration to be used can be changed as appropriate according to the technical level at the time of carrying out the present embodiment.

### Summarization

As described above, the information processing apparatus according to the embodiment of the present disclosure sets the image acquisition interval that satisfies the Nyquist sampling theorem. When the process of correcting the position coordinates or the time axis of the pixels is performed, it is possible to obtain the four-dimensional synchronous image stack which is substantially the same as that when virtual imaging elements are disposed by the number of pixels in an orthogonal coordinate space and simultaneously perform imaging.

The information processing apparatus according to the embodiment of the present disclosure can generate a 3D image without an increase in the calculation load when the 3D image is viewed at a desired angle from a desired viewpoint depth, and can display the 3D image on a 3D display apparatus. The process of displaying the 3D image can be performed in real time.

The information processing apparatus according to the embodiment of the present disclosure can store the corrected four-dimensional synchronous image stack in various storage devices or memories. Therefore, the configuration of the information processing apparatus can be clearly classified to be suitable for two processes: the correction process and the stereoscopic image generation process. Thus, the information processing apparatus can be designed with ease and the capacity of the stored image data can be reduced.

The preferred embodiments of the present disclosure have been described in detail with reference to the accompanying drawings, but the technical scope of the present disclosure is not limited thereto.

Additionally, the following configurations are also within the technical scope of the present disclosure.

(1) An information processing apparatus including:
   a correction unit that corrects at least position coordinates used to specify a position of an enlarged-image group generated in accordance with a scanning method of a microscope that scans a sample in vertical, horizontal, and depth directions and generates an image data group corresponding to the enlarged-image group of the sample; and
   a stereoscopic image generation unit that generates a stereoscopic image of the enlarged-image group by giving parallax to the corrected image data group.
(2) The information processing apparatus according to (1), wherein the correction unit corrects the enlarged-image group so that a lattice point interval of a predetermined coordinate axis of the position coordinates is constant.
(3) The information processing apparatus according to (1) or (2), wherein the correction unit further corrects a time corresponding to the enlarged-image group generated in accordance with the scanning method of the microscope so that acquisition times of pixels forming the enlarged-image group are the same.
(4) The information processing apparatus according to any of (1) to (3), further including:
   a display region determination unit that determines a display region of the enlarged-image group displayed on a display screen in response to a user's operation,
   wherein the stereoscopic image generation unit generates the stereoscopic image regarding the determined display region.
(5) The information processing apparatus according to any of (1) to (4), wherein the enlarged-image group is generated by sampling the sample at a sampling interval that satisfies a Nyquist sampling theorem.
(6) The information processing apparatus according to any of (1) to (5), further including:
   a microscope control unit that controls a process of scanning the sample by the microscope,
   wherein the microscope control unit controls the microscope such that the microscope samples the sample at a sampling interval that satisfies a Nyquist sampling theorem.
(7) The information processing apparatus according to any of (1) to (6), further including:
   a stereoscopic image output unit that outputs the stereoscopic image of the enlarged-image group generated by the stereoscopic image generation unit,
   wherein the stereoscopic image output unit outputs the stereoscopic image in chronological order corresponding to the stereoscopic image.
(8) The information processing apparatus according to any of (1) to (7), wherein the sample scanning method performed by the microscope is a method of scanning the sample while continuously changing at least two of the vertical, horizontal, and depth directions of the sample.
(9) The information processing apparatus according to any of (1) to (8), further including:
   a storage unit that stores image data corresponding to the enlarged-image group corrected by the correction unit,
   wherein the stereoscopic image generation unit generates the stereoscopic image using the image data corresponding to the corrected enlarged-image group acquired from the storage unit.
(10) An information processing method including:
   correcting at least position coordinates used to specify a position of an enlarged-image group generated in accordance with a scanning method of a microscope that scans a sample in vertical, horizontal, and depth directions and generates an image data group corresponding to the enlarged-image group of the sample; and
   generating a stereoscopic image of the enlarged-image group by giving parallax to the corrected image data group.
(11) A program for causing a computer, which is able to acquire data from a microscope that scans a sample in vertical, horizontal, and depth directions and generates an image data group corresponding to an enlarged-image group of the sample, to realize:
   a correction function of correcting at least position coordinates used to specify a position of the enlarged-image group generated in accordance with a scanning method of the microscope; and
   a stereoscopic image generation function of generating a stereoscopic image of the enlarged-image group by giving parallax to the corrected image data group.
(12) An information processing system including:
   a microscope that scans a sample in vertical, horizontal, and depth directions and generates an image data group corresponding to an enlarged-image group of the sample; and
   an information processing apparatus that includes a correction unit that corrects at least position coordinates used to specify a position of the enlarged-image group generated by the microscope in accordance with a scanning method of the microscope and a stereoscopic image generation unit that generates a stereoscopic image of the enlarged-image group by giving parallax to the corrected image data group.

The present disclosure contains subject matter related to that disclosed in Japanese Priority Patent Application JP 2011-196749 filed the Japan Patent Office on September 9, 2011, the entire content of which is hereby incorporated by reference.

## Claims

1. An information processing apparatus comprising:
a correction unit that corrects at least position coordinates used to specify a position of an enlarged-image group generated in accordance with a scanning method of a microscope that scans a sample in vertical, horizontal, and depth directions and generates an image data group corresponding to the enlarged-image group of the sample; and
a stereoscopic image generation unit that generates a stereoscopic image of the enlarged-image group by giving parallax to the corrected image data group.

2. The information processing apparatus according to claim 1, wherein the correction unit corrects the enlarged-image group so that a lattice point interval of a predetermined coordinate axis of the position coordinates is constant.

3. The information processing apparatus according to claim 2, wherein the correction unit further corrects a time corresponding to the enlarged-image group generated in accordance with the scanning method of the microscope so that acquisition times of pixels forming the enlarged-image group are the same.

4. The information processing apparatus according to claim 3, further comprising:
a display region determination unit that determines a display region of the enlarged-image group displayed on a display screen in response to a user's operation,
wherein the stereoscopic image generation unit generates the stereoscopic image regarding the determined display region.

5. The information processing apparatus according to anyone of claims 1 to 4, wherein the enlarged-image group is generated by sampling the sample at a sampling interval that satisfies a Nyquist sampling theorem.

6. The information processing apparatus according to anyone of claims 1 to 5, further comprising:
a microscope control unit that controls a process of scanning the sample by the microscope,
wherein the microscope control unit controls the microscope such that the microscope samples the sample at a sampling interval that satisfies a Nyquist sampling theorem.

7. The information processing apparatus according to anyone of claims 1 to 6, further comprising:
a stereoscopic image output unit that outputs the stereoscopic image of the enlarged-image group generated by the stereoscopic image generation unit,
wherein the stereoscopic image output unit outputs the stereoscopic image in chronological order corresponding to the stereoscopic image.

8. The information processing apparatus according to anyone of claims 1 to 7, wherein the sample scanning method performed by the microscope is a method of scanning the sample while continuously changing at least two of the vertical, horizontal, and depth directions of the sample.

9. The information processing apparatus according to anyone of claims 1 to 8, further comprising:
a storage unit that stores image data corresponding to the enlarged-image group corrected by the correction unit,
wherein the stereoscopic image generation unit generates the stereoscopic image using the image data corresponding to the corrected enlarged-image group acquired from the storage unit.

10. An information processing method comprising:
correcting at least position coordinates used to specify a position of an enlarged-image group generated in accordance with a scanning method of a microscope that scans a sample in vertical, horizontal, and depth directions and generates an image data group corresponding to the enlarged-image group of the sample; and
generating a stereoscopic image of the enlarged-image group by giving parallax to the corrected image data group.

11. A program for causing a computer, which is able to acquire data from a microscope that scans a sample in vertical, horizontal, and depth directions and generates an image data group corresponding to an enlarged-image group of the sample, to realize:
a correction function of correcting at least position coordinates used to specify a position of the enlarged-image group generated in accordance with a scanning method of the microscope; and
a stereoscopic image generation function of generating a stereoscopic image of the enlarged-image group by giving parallax to the corrected image data group.

12. An information processing system comprising:
a microscope that scans a sample in vertical, horizontal, and depth directions and generates an image data group corresponding to an enlarged-image group of the sample; and
an information processing apparatus that includes a correction unit that corrects at least position coordinates used to specify a position of the enlarged-image group generated by the microscope in accordance with a scanning method of the microscope and a stereoscopic image generation unit that generates a stereoscopic image of the enlarged-image group by giving parallax to the corrected image data group.
